(19) Europäisches Patentamt
European Patent Office
Office européen des brevets

(11) EP 1 729 324 B1

(12) EUROPÄISCHE PATENTSCHRIFT

(45) Veröffentlichungstag und Bekanntmachung des Hinweises auf die Patenterteilung:
08.03.2017 Patentblatt 2017/10

(51) Int Cl.:
*H01J 61/30* (2006.01)     *H05B 41/292* (2006.01)
*H01J 61/82* (2006.01)     *H05B 41/288* (2006.01)
*H05B 41/392* (2006.01)

(21) Anmeldenummer: 06011023.6

(22) Anmeldetag: 29.05.2006

(54) **Hochdrucklampe und zugehöriges Betriebsverfahren für den Resonanzbetrieb von Hochdrucklampen im longitudinal Mode und zugehöriges System**

High-pressure lamp and associated system and method for the resonant operation of high-pressure lamps in longitudinal mode

Lampe à haute-pression, ainsi que appareil et méthode pour la commande sur le mode de résonance longitudinal de la lampe à haute-pression.

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.06.2005 DE 102005025155**

(43) Veröffentlichungstag der Anmeldung:
**06.12.2006 Patentblatt 2006/49**

(73) Patentinhaber: **OSRAM GmbH**
**80807 München (DE)**

(72) Erfinder:
• **Stockwald, Klaus, Dr.**
**82110 Germering (DE)**
• **Weiss, Herbert**
**82041 Deisenhofen (DE)**

(74) Vertreter: **Nordmeyer, Philipp Werner et al**
**df-mp Dörries Frank-Molnia & Pohlman**
**Patentanwälte Rechtsanwälte PartG mbB**
**Theatinerstraße 16**
**80333 München (DE)**

(56) Entgegenhaltungen:
**EP-A- 0 926 703        EP-A- 1 193 734**
**EP-A- 1 422 980        EP-A- 1 434 471**
**US-A1- 2002 079 841    US-A1- 2003 117 075**
**US-A1- 2003 117 086**

**Beschreibung**

Technisches Gebiet

Die Erfindung betrifft eine Hochdrucklampe und zugehöriges Betriebsverfahren für den Resonanzbetrieb von Hochdrucklampen im longitudinalen Mode und zugehöriges System gemäß dem Oberbegriff des Anspruchs 1. Es handelt sich dabei um Hochdruckentladungslampen mit keramischem Entladungsgefäß, bevorzugt mit einem Aspektverhältnis von mindestens 2,5.

Stand der Technik

Die EP 926 703 beschreibt eine Hochdruckentladungslampe, die ein Entladungsgefäß aufweist, mit einem Mittenbereich mit konstantem Innendurchmesser und zwei Endbereichen mit variablem Innendurchmesser. Am Endbereich fragt loweils eine Elektroden in das Entladungsgefäß.

Aus der US 6 400 100 ist bereits eine Hochdrucklampe und zugehöriges Betriebsverfahren für den Resonanzbetrieb von Hochdrucklampen im longitudinalen Mode und zugehöriges System bekannt. Dort wird ein Verfahren zum Auffinden der zweiten longitudinalen akustischen Resonanzfrequenz angegeben. Sie geht davon aus, dass beim kontinuierlichen Abfahren der den longitudinalen Modus anregenden Frequenz durch ein Auftreten einer relativen Brennspannungserhöhung der Lampe die Resonanzfrequenz in vertikaler Brennlage gefunden werden kann. Es zeigt sich, dass mit dieser Methode die longitudinale Frequenz für einen segregierten Bogenzustand in vertikaler Resonanz gefunden und dann beibehalten wird. Diese so gefundene Frequenz kann aber je nach Füllungszusammensetzung der Metallhalogenidfüllung und Zeitpunkt des Ablaufes der Suchprozedur deutlich zu hoch angesiedelt sein, so dass ein Anregen der akustischen Resonanz bei der mit o.g. Methode gefundenen Frequenz eine unzureichende Durchmischung ergibt und die Segregation nicht genügend gut aufhebt. Die Implementierung in ein elektronisches Vorschaltgerät ist außerdem aufwendig. Weitere Schriften, die sich mit der Reduzierung der Segregation durch gezielte Anregung der zweiten longitudinalen Mode beschäftigen sind beispielsweise US 2003/117075, US 2003/117085, US 2005/067975 und US 2004/095076. In all diesen Schriften wird ein keramisches Entladungsgefäß mit hohem Aspektverhältnis von mindestens 1,5 verwendet, das zylindrisch ist. Die Enden sind gerade oder halbkugelig.

Ähnliche Versuche wurden bereits mit bekannten Metallhalogenidlampen durchgeführt, die noch das früher übliche Entladungsgefäß aus Quarzglas aufwiesen, siehe US 5 773 937. Auch dort hatte man versucht, ein möglichst gerades Entladungsgefäß mit zylindrischem Mittenteil zu verwenden. Nur zwangsläufig sind die Enden abgerundet, die dann zur Quetschung führen. Auch keramische Entladungsgefäß sind dort beschrieben, aber offenbar auf Natriumhochdrucklampen gemünzt.

Aus der EP-A 1 058 288 und EP 1 394 838 ist ein keramisches Entladungsgefäß bekannt, das schräge Endstücke aufweist. Es wird aber nicht im Resonanzbetrieb betrieben.

**Darstellung der Erfindung**

Es ist eine Aufgabe der vorliegenden Erfindung, eine Hochdruckentladungslampe mit keramischem Entladungsgefäß gemäß dem Oberbegriff des Anspruchs 1 bereitzustellen, die optimal auf den Betrieb mit akustischer Resonanz eingestellt ist.

Eine weitere Aufgabe ist es, ein Betriebsverfahren bereitzustellen, das eine Farbsteuermöglichkeit für Metallhalogenidlampen schafft, insbesondere für den vertikalen Betrieb, und dabei die Segregation weitgehend unterdrückt. Eine weitere Aufgabe ist es, ein System aus Lampe und Elektronisches Vorschaltgerät dafür bereitzustellen.

Diese Aufgabe wird durch die kennzeichnenden Merkmale des Anspruchs 1 gelöst. Besonders vorteilhafte Ausgestaltungen finden sich in den abhängigen Ansprüchen.

Das erfindungsgemäße Betriebsverfahren ist darauf ausgerichtet, eine oder mehrere Resonanzmoden anzuregen, die die zweite longitudinale Resonanz enthalten oder mit dieser gekoppelt sind. Damit sind insbesondere Frequenzen gemeint, wie sie in US 2005/067975 als Kombinationsmode bezeichnet sind, also ein Mode, dessen Frequenz sich beispielsweise aus den Frequenzen von longitudinaler und weiterer azimutaler Resonanz gesetzmäßig errechnet. Dabei ist es möglich, evtl. eine Amplitudenmodulation zu nutzen und insbesondere mittels Pulsweitenmodulation zu takten.

Dies schafft insbesondere Möglichkeiten der Farbsteuerung von Metallhalogenidlampen mittels getakteter und/oder strukturierter AmplitudenModulation, beispielsweise in Form von Pulsweitenvariation, evtl. kombiniert mit Pulshöhen-Variation, bei gleichbleibendem Lampenleistungsniveau.

Es wird dabei davon ausgegangen, dass für eine vorgegebene Geometrie des Entladungsgefäßes ein enger Toleranzbereich für die Innenlänge vorliegt. Sie stellt diejenige Dimension der Lampe dar, die die longitudinalen akustischen Resonanzen definiert, welche für eine etwaige optimale Durchmischung des Bogenplasmas, insbesondere bei vertikaler Brennlage, angeregt werden muss.

In vertikaler Brennlage ergeben sich aufgrund der Entmischung stark veränderte Schallgeschwindigkeiten gegenüber horizontaler Brennlage, die durch die Entmischung bei senkrechter Konvektion der im Plasma strahlenden Teilchen hervorgerufen werden.

Die Erfindung geht insbesondere aus von einem Betrieb mit einer Trägerfrequenz des Lampenstroms im mittleren HF-Bereich. Die Trägerfrequenz entspricht in etwa der Frequenz der halben zweiten azimutalen akustischen Resonanz, wenn die Lampe im gewöhnlichen Betriebszustand ist. Mit Trägerfrequenz ist immer entweder die Frequenz des Stromsignals oder Spannungssignals gemeint. Dagegen ist für die Anregung der akustischen Resonanz immer die Leistungsfrequenz maßgeblich, die beim Doppelten der Anregungsfrequenz von Strom oder Spannung liegt.

Ein Anhaltspunkt ist beispielsweise die konische Geometrie des Entladungsgefäßes einer 70 W-Lampe, wobei die Trägerfrequenz im Bereich von 45 bis 75 kHz, typisch 50 kHz, liegt, und wobei dieser Trägerfrequenz bevorzugt eine Sweepfrequenz als FM-Modulation aufgeprägt ist, deren Wert ausgewählt ist aus einem Bereich von 100 bis 200 Hz. Diesem Betrieb wird vorteilhaft eine Amplitudenmodulation aufgeprägt, die durch mindestens eine der beiden Parameter AM-Grad und Zeitdauer der AM, also einem Puls-Pausen-Verhältnis sowie zeitgesteuerter AM-Tiefe AM(t) charakterisiert.

Neben dem Verfahren beinhaltet die Erfindung auch Systeme, in die die beschriebenen Prozeduren implementiert sind.

Im einzelnen wird bei hocheffizienten Metallhalogenidlampen mit keramischem Entladungsgefäß mit großer Innenlänge ein Aspektverhältnis (innere Länge/innerer Durchmesser) des Entladungsgefäßes) von mindestens 2,5 bevorzugt, insbesondere L/D =2,5-5,5. Dabei wird mit mittel- bis hochfrequentem AM-Betrieb über den Amplituden-Modulationsgrad die Intensität einer oder mehrerer longitudinaler Moden (bevorzugt die zweite oder vierte) angeregt. In diesen Moden wird die Füllung in den Zentralbereich des Entladungsgefäßes transportiert und somit die Füllungsverteilung im Entladungsgefäß entlang des Bogens eingestellt. Dies ist insbesondere bei vertikal oder schräg (> 55° Neigungswinkel der Lampe) betriebenen Lampen besonders wichtig. Hierdurch verändert sich die Zusammensetzung des Dampfdruckes und auch die spektrale Absorption der abgelagerten Füllungsbestandteile. Die Modulationsfrequenz (Grundfrequenz der AM) zum Anregen der longitudinalen Moden liegt typischerweise im Frequenzbereich von 20-35 kHz. Bei einer Trägerfrequenz von typisch 45-75 kHz wird dazu eine FM (Frequenzmodulation) mit Sweep-Moden im Bereich von ca. 100-200 Hz durchgeführt.

Typische Metallhalogenid-Füllungen enthalten DyJ3, CeJ3, CaJ2, CsJ, LiJ und NaJ, evtl. auch TlJ.

Es wurden bisher verschiedene Betriebsmoden zur stabilen Einstellung von Segregationsunterdrückung in Lampen mit hohem Aspektverhältnis des Entladungsgefäßes beschrieben. Bisher wurden im Stand der Technik lediglich rein zylindrische Entladungsgefäße beschrieben, die als ideal für diese Betriebsarten angesehen wurden.

Überraschend zeigt sich jedoch, dass eine rein zylindrische Gestalt nicht optimal ist. Vielmehr stellt sich heraus, dass Formen mit unterschiedlicher Innenkontur und Ausbildung des Elektrodenrückraumes die Stabilität der genutzten akustischen Moden deutlich beeinflussen.

Es zeigt sich insbesondere, dass bei einigen besonders gut geeigneten Betriebsarten, die die zweite longitudinale akustische Resonanz zur Unterdrückung der Segregation nutzen, -- insbesondere bei gleichzeitiger Nutzung von FM- und AM-modulierten HF-Stromformen oder bei zeitlich sequentieller Nutzung, insbesondere FM-Modulation abwechselnd mit Festfrequenzbetrieb, siehe beispielsweise US 6 184 633 -- rein zylindrische Formen des Entladungsgefäßes sogar akustische Instabilitäten aufgrund der hohen Resonatorgüte erzeugen und damit für den genannten Betrieb nur begrenzt geeignet sind. Elektronische Vorschaltgeräte müssen bisher aufwendige und komplexe Kontrollmechanismen nutzen, um diese Instabilitäten abzufangen.

Es wird nunmehr eine spezielle Ausbildung der Innenkontur des Entladungsgefäßes und insbesondere des Elektrodenrückraumes vorgeschlagen, die sich bevorzugt anwenden lässt für einen Betriebsmodus, der zumindest zeitweise den 2. akustischen longitudinalen Resonanzmodus oder die Kombination dieses Modus mit der Anregung von radialen oder azimutalen Moden nutzt.

Die vorgeschlagene Lösung ist besonders effektiv für Entladungsgefäße mit eine Aspektverhältnis AV von mindestens 2,5 und höchstens 6. besonders bevorzugt ist ein Bereich $4 \leq AV \leq 5$. mit anderen Worten soll gelten:

$$2,5 \leq IL/ID \leq 6 \qquad\qquad\qquad (1)$$

Das Aspektverhältnis ist definiert als Verhältnis Innenlänge IL zu Innendurchmesser ID(=2*IR) mit IR = Innen-Radius. Dabei bezieht sich der Innenradius IR aber nur auf ein Mittenteil des Entladungsgefäßes, das zylindrisch verbleibt.

Jedoch erfahren die Endbereiche eine spezielle Formgestaltung. Wenn man die Elektroden-Einstandslänge als Parameter LINS vorgibt, soll das Entladungsgefäß eine veränderte Innenkonturausbildung aufweisen, die sich an diesem Parameter orientiert. Erfindungsgemäß soll die Größe LINS im Bereich von 7-21% der inneren Gesamtlänge IL liegen, also

$$0.07*IL \leq LINS \leq 0.21*IL \qquad (2)$$

die Länge LRD des modifizierten Endbereichs soll sich über eine Länge, ausgehend von dem Punkt der maximalen IL, von mindestens 0,5 LINS und maximal 1,5 LINS erstrecken. Dieser maximale Wert ist von physikalischer Bedeutung und definiert die sog. Elektroden-Raum-Länge ERL, so dass gilt:

$$ERL = 1.5* LINS.$$

Es zeigt sich, dass im modifizierten Endbereich der Durchmesser IDE sich mindestens auf 85 % des ursprünglichen Durchmesser ID reduzieren muss, also IDE $\leq$ 0,85 ID. Diese Einschnürung ermöglicht es, für höhere harmonische der 2. longitudinalen eine erhöhte Dämpfungscharakteristik zu erzeugen, so dass eine ausreichende Stabilität bei der Abstimmung auf die mischenden longitudinalen Moden erzeugt wird.

Weiterhin hat sich insbesondere gezeigt, dass über den Bereich, in welchem eine Verjüngung des Innendurchmessers von ID auf 0,85 bis 0,15 ID erfolgt, ein zur Lampenachse senkrechter Verlauf der Wandung vermieden werden sollte. An diesen senkrechten Abschnitten würden die longitudinale Resonanzen verstärkende Reflexionen von akustischen longitudinalen Wellen auftreten. Dabei ist jedoch ein ausreichend kleinformatiger senkrechter Wandabschnitt nicht ausgeschlossen, solange deren Ausdehnung höchstens 0.05*ID entspricht, weil derartig kleine Flächen nicht merklich reflektieren.

Günstig haben sich schräg zur Lampenachse und damit zur Ausbildungsrichtung von longitudinalen Moden verlaufende Konturen des Endbereichs herausgestellt, die den Innendurchmesser mindestens bis auf 0.6*ID annähernd kontinuierlich verjüngen. Das entspricht dreidimensional einer konischen Verjüngung.

Die Übergangskontur des Endbereichs kann aber auch konkav, also nach außen gewölbt --z.B. halbkugelschalenartig-- oder konvex , also nach innen gewölbt --z.B. als Rotationsfläche eines Ellipsenausschnittes-- verlaufen und kann dann ab etwa einer Einschnürung auf 0.6*ID wieder in eine senkrecht zur Lampenachse verlaufende Innenwandung als Stirnfläche übergehen. Dies kann gegebenenfalls direkt als Übergang in die Kapillare oder ein Stopfenteil verstanden werden. Besonders bevorzugt liegen zwei verschieden gekrümmte Abschnitte, einer konkav und einer konvex, hintereinander.

Bei konkavem Verlauf des Endbereichs sollte der Krümmungsradius KR maximal gleich dem halben Innendurchmesser IR = ID/2 sein, bei konvexem oder linear verlaufender konischer Verjüngung sollte die Tangente am innen gelegenen Endpunkt des Endbereichs einen spitzen Winkel $\alpha e$ von höchstens 45° mit der achsparallelen Ausrichtung des Mittenbereichs einnehmen.

Ein Beispiel eines rein konvex gekrümmten Endbereichs ist eine trompetentrichterförmig geformte Innenkontur, insbesondere eine als Ausschnitt eines Hyperboloids geformte Innenkontur.

Insbesondere nimmt einen starken Einfluss auf die Dämpfung eine zentrale Zone des Endbereichs der Länge LRD, in einem Abstand vom Ende des Innenvolumens, der vom Ende des Entladungsgefäßes aus betrachtet mindestens zwischen 0.40*LRD bis 0.60*LRD sich erstreckt. Hier soll der Tangentenwinkel $\alpha t$ der Innenkontur gegenüber der axialen Richtung von der Achse aus gemessen bevorzugt im Bereich zwischen $\alpha t = 15°$ und $\alpha t = 45°$ liegen. Besonders bevorzugt liegt er im Bereich zwischen $\alpha t = 25°$ und $\alpha t = 35°$.

Ein Kriterium für die konkrete Auswahl des Verlaufes der inneren Kontur des Endbereichs ist insbesondere die Resonatorgüte bei Anregung der 2. longitudinalen akustischen Resonanz. Die Resonatorgüte muss selektiv für die Anregung der 2. longitudinalen Resonanz 2L ein genügend hohes Maß erreichen. Die Resonatorgüte lässt sich aus der für die Anregung der zweite Longitudinalen notwendigen Leistungsanteilen im Leistungsfrequenzspektrum ableiten. Typisch liegt sie bei ca. 15 bis 25 % der Lampenleistung in diesem Bereich.

Je nach Betriebsart gilt dies auch für mit dieser Resonanz gekoppelte Resonanzen, wie sie bei Mischmoden auftreten, beispielsweise radiallongitudinale oder azimuthal-longitudinale Resonanzen. Typisch sind die Anregungsmoden 1 R+2L oder 3AZ+2L. Am besten geeignet sind solche Konturen, die gleichzeitig für höhere Harmonische der 2L eine deutlich verringerte Resonatorgüte aufzeigen, diese also möglichst dämpfen.

Hervorragende Bedingungen für die Auslegung der Innenkontur von hocheffizienten Keramiklampen für den Betrieb im kombinierten AM+FM-Betrieb werden erzielt bei einer gezielten kombinierten Anregung der 2.+ 4. longitudinalen Resonanz und deren Kombination mit der longitudinal-radialen Resonanz bei gleichzeitiger möglichst guter Unterdrückung der 8. longitudinalen Resonanz und deren Resonanz-Kombinationen.

Wesentlich dafür ist zunächst einmal die Bereitstellung einer ausreichend großen Stirnfläche am Resonatorende, deren Durchmesser IDE wenigstens 15 % des zylindrischen Innendurchmessers ID ausmacht. Bevorzugt sollte der Innendurchmesser DIE mindestens 20 % des zylindrischen Innendurchmessers ID ausmachen.

Die Kombination der o.e. akustischen Resonanzen im Entladungsgefäß lässt die Einstellung verbesserter, akustisch erzeugter Konvektionszellen-Muster unter erhöhten Druckbedingungen im konvektionsbestimmten Bogenplasma-Bereich zu, derart, dass Kombinationen von erhöhten Lichtausbeuten von 120 lm/W oder sogar mehr mit einer Farbwiedergabe Ra von mehr als 85 und typisch 90 über längere Betriebszeiten von typ. 4000 h - 6000 h bei gutem Maintenance-Verhalten erreichbar sind.

Dabei zeigt sich, dass eine Verengung der Lampen-Innenkontur im EndenBereich des Entladungsgefäßes über eine Länge LRD bevorzugt ist:

$$LRD = 0{,}095 \times IL \text{ bis } 0{,}155 \times IL,$$

wobei ein typischer Wert LRD = 0,125 x IL ist.

Dabei ist LRD auf die gesamte Innenlänge IL der Lampe bezogen und endet in einer Stirnfläche mit einem reduzierten Innendurchmesser IDE. Diese Randbedingungen sind für die Erzeugung eines stabilen Konvektionszellengebildes ideal, welches über das stehende akustische Wellenfeld im Plasmagas erzeugt wird, um eine optimale Durchmischung des Bogenplasmagases zu erzielen, so dass in beliebiger Lampenlage eine Farbentmischung des Plasmas vollständig unterdrückt wird.

Der Innendurchmesser der Lampe wird über den Endenbereich bevorzugt kontinuierlich reduziert derart, dass ein Übergang vom annähernd zylindrischen Mittenteil mit Innendurchmesser ID zum sich verjüngenden Endenbereich in einem konkaven Radius R1 der Verjüngung mündet.

Bevorzugt ist ID/6 ≤ R1 ≤ ID/2. Typische Werte liegen bei 0,35 ID bis 0,5 ID.

Besonders bevorzugt ist ein Bereich LRD der Verengung, der grob gesprochen S-förmig gekrümmt ist. Die Reduzierung des Innendurchmessers geht dabei ausgehend von einem konkav verlaufenden Radius R1 über einen Wendepunkt in einen konvex verlaufenden Radius R2 über, der auf eine senkrecht zur Lampenachse verlaufende Stirnfläche mit resultierendem Durchmesser IDE trifft.

Bevorzugt ist: ID/4 ≤ R2 ≤ ID. Ein typischer Wert ist R2 = 0,65 ID.

Insbesondere hat sich gezeigt, dass der Durchmesser der Stirnfläche IDE in einem Bereich zwischen 0,15 und 0,85 ID liegen sollte.

Besonders gute Ergebnisse werden erzielt, wenn dieser Durchmesser IDE an den ursprünglichen Innendurchmesser ID des Entladungsgefäßes geeignet angepasst ist. Grob gesprochen sollte das Verhältnis zwischen IDE und ID umso kleiner sein, je größer ID selbst ist. bevorzugt gilt die Richtschnur, dass

$$VID = IDE/ID = a \times ID + b,$$

mit

a = -0.120 bis -0.135, und mit b = 1.0 bis 1.1.

Bei zylindrischen Endenformen sind die Werte der Resonatorgüte für 2L und höheren Harmonischen wie 4L oder 6L miteinander vergleichbar. Dies führt bei im wesentlichen zylindrischen Entladungsgefäßen dazu, dass bei Überfahren der akustischen 2. longitudinalen Resonanz -- bedingt durch die sehr hohe Resonatorgüte -- höhere harmonische Resonanzen anspringen, die zum Beispiel im Falle einer Amplitudenmodulation angeregt werden. Dadurch bilden sich zusätzliche akustisch bestimmte Konvektionszellen aus, die u.U. zu Impedanzsprüngen und zum Verlöschen der Bogenentladung führen können. Beim Überfahren der 2. longitudinalen Resonanzfrequenz $f_{res\_2L}$ von einer höheren Anregungsfrequenz aus --typisch von $f_{start}AM = f_{res\_2L}$ + 5 kHz bis $f_{stop}AM = f_{res\_2L}$ - 5 kHz bei einem typischen AM-Grad von 15 - 35 %treten dann starke Lampen-Impedanzvariationen und Bogenunruhe auf, was zu instabilen Lampenverhältnissen führt. Auch ein Einstellen der Anregungsfrequenz auf eine Frequenz in der Nähe der verstärkt auftretenden Lampenimpedanz-Variation kann zu unerwünschter Bogenunruhe führen.

Verbunden damit sind deutlich schwankende Lampen-Impedanzwerte mit Spitzenwerten, die das 1.5-fache der im nichtangeregten Zustand vorhandenen Lampenimpedanz überschreiten. Dabei kann es zum Verlöschen der Lampe kommen. Ein Modus zur stabilen verbesserten Unterdrückung einer in vertikaler oder schräger Brennstellung der Lampe vorhandenen Segregation der Bogensäule kann somit nicht eingestellt werden.

Dies gelingt erst bei Wahl der erfindungsgemäßen Endenformen. Ein Überfahren der 2. longitudinalen Resonanzfrequenz von höherer Anregungsfrequenz aus -- typisch von $f_{start}AM = f_{res\_2L}$ + 5 kHz bis $f_{stop}AM = f_{res\_2L}$ - 5 kHz bei einem typischen AM-Grad von 15 - 35 % -- führt zur Ausbildung von stabilen Bogenformen mit Unterdrückung des Anspringens von höheren harmonischen Resonanzen. Es zeigt sich eine stabile Ausbildung von zwei symmetrischen Bogeneinschürungen bei ca. 1/3 bis 1/4 bzw. ca. 2/3 bis 3/4 der Innenlänge IL im Frequenzbereich der Amplitudenmodulationsfrequenz fAM zwischen fAM = $f_{res\_2L}$ bis typisch fAM = $f_{res\_2L}$ -1 kHz. Bei weiterer Verringerung der fAM wird die Anregung der zweiten Longitudinalen stabil beendet ohne dass eine Bogeninstabilität erfolgt, wobei sich zwei zur Lampenmitte symmetrischen Bogeneinschnürungen ausbilden, und zwar bei reproduzierbaren Grenzfrequenzen fAM_end.

## Kurze Beschreibung der Zeichnungen

Im folgenden soll die Erfindung anhand mehrerer Ausführungsbeispiele näher erläutert werden. Es zeigen:

Figur 1                  eine Hochdruckentladungslampe, schematisiert;

Figur 2                  ein Entladungsgefäß einer Hochdrucklampe, schematisiert;

Figur 3 - 9 und 11      verschiedene Ausführungsformen des Endes des Entladungsgefäßes;

Figur 10                das Impedanzverhalten einer derartigen Lampe;

Figur 12                das Leistungsspektrum einer derartigen Hochdruckentladungslampe;

Figur 13                den schematischen Aufbau eines elektronischen Vorschaltgeräts;

Figur 14                ein weiteres Ausführungsbeispiel eines Endes des Entladungsgefäßes;

Figur 15                eine Darstellung für VID.

## Bevorzugte Ausführung der Erfindung

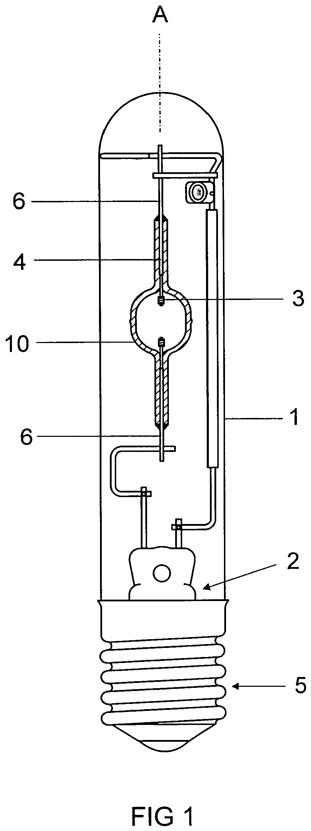

In Figur 1 ist schematisch eine Metallhalogenidlampe gezeigt mit einem Außenkolben 1 aus Hartglas oder Quarzglas, der eine Längsachse besitzt und einseitig durch eine Tellereinschmelzung 2 verschlossen ist. An der Tellereinschmelzung 2 sind zwei äußere Stromzuführungen nach außen (nicht sichtbar) geführt. Sie enden in einem Sockel 5. Im Außenkolben ist ein zweiseitig abgedichtetes keramisches Entladungsgefäß 10 aus PCA ($Al_2O_3$) mit zwei Elektroden 3 und einer Füllung aus Metallhalogeniden axial eingesetzt.

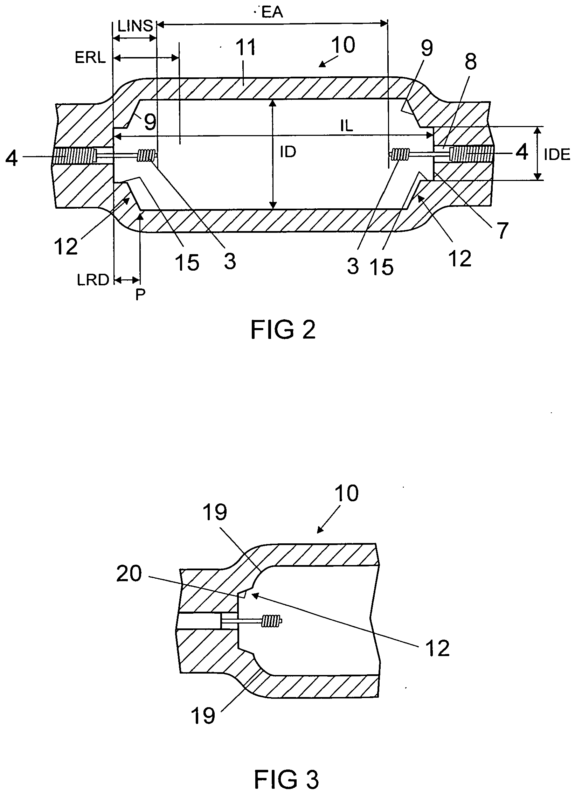

In Fig. 2 ist eine schematische Darstellung des Entladungsgefäßes 10 mit relativ hohem Aspektverhältnis ID/IL gezeigt. Das Entladungsgefäß 10 hat ein zylindrischem Zentralteil 11 und zwei Enden 12, mit einem gegebenem Innendurchmesser ID=2*IR, wobei IR der Innenradius ist, und gegebener Innenlänge IL. An den Enden 12 des Entladungsgefäßes sind Elektroden 3 angeordnet, die mittels Durchführungen 4 mit inneren Stromzuführungen 6 (siehe Figur 1) verbunden sind. Das Entladungsgefäß enthält typisch eine Füllung aus Puffergas Hg mit Argon und Metallhalogeniden, beispielsweise einer Mischung aus Alkali- und Seltenerdjodiden sowie des Thallium.

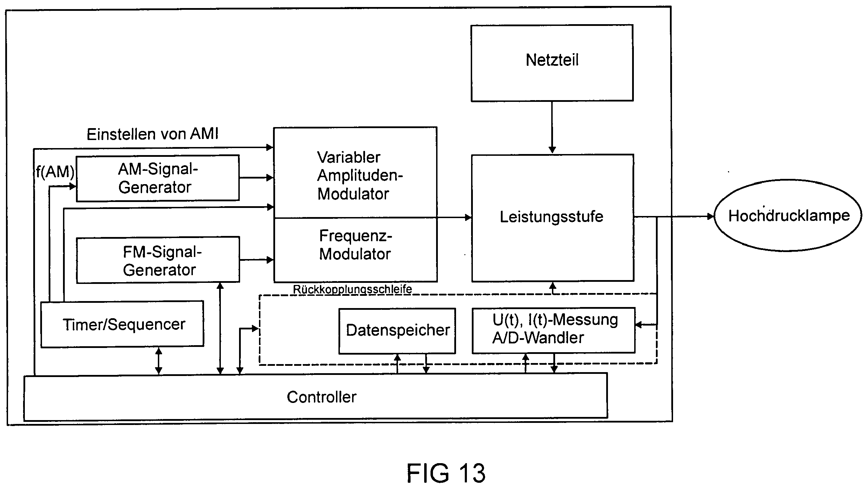

Die Lampe wird an einem elektronischen Vorschaltgerät, siehe Figur 13, mit Hochfrequenz in akustisch stabilisierter Resonanz betrieben. Dafür hat sich vor allem die zweite longitudinale Resonanz oder damit zusammenhängende Resonanzen empfohlen.

Weiter ist in Figur 2 die Größe LINS als die in das Entladungsvolumen ragende Länge der Elektrode 3 definiert. Die Größe ERL ist die Elektrodenraumlänge und beträgt das 1,5-fache von LINS. Des weiteren ist die Größe LRD als die axiale Länge definiert, die vom Ende des Entladungsvolumens bis zu dem Punkt P reicht, bei dem die Verringerung des Innendurchmessers beginnt, also dort, wo das Zentralteil 11 endet. die Größe LINS ist hier typisch 0,14 IL. die Größe LRD ist hier etwa 0,8 LINS. LRD sollte allgemein zwischen 0,5 LINS und 1,5 LINS liegen, insbesondere im Bereich 0,6 bis 1,1 LINS. Der Durchmesser IDE am Ende des Entladungsgefäßes sollte sich wenigstens auf 0,6 ID reduzieren, bevorzugt auf 0,3 bis 0,55 ID.

Ein Ausführungsbeispiel ist eine hocheffiziente Metallhalogenidlampe mit 70 W Leistung. Das Entladungsgefäß hat eine größte axiale Innenlänge IL von 18,7 mm und einen Innendurchmesser ID von 4 mm. Das Aspektverhältnis ist somit 4,7. Die Hochdrucklampe ist mit 4,4 mg Hg und einer Metallhalogenidmischung bestehend aus Nal:Cel3:Cal2:TlI = 1,78 : 0,28 : 1,93 : 0,28 mg gefüllt. Der Elektrodenabstand EA beträgt 14,8 mm.

Durch Voruntersuchungen wurde festgestellt, dass ein bogenstabilisierter Betrieb möglich ist, wobei der Bogen in vertikaler und horizontaler Brennlage auf die Elektrodenverbindungslinie zentriert ist. Dafür wird ein Betrieb mit gesweepter Hochfrequenz im Bereich von 45-55 kHz mit typischer Sweep-Rate von fFM = 130 Hz als Ausgangspunkt genommen.

In vertikaler Brennlage zeigt sich nach dem Betriebsstart und einer Aufwärmphase von ca. 120 sec eine segregierte, also entmischte Metallhalogenidverteilung entlang des Bogens. Der in der Dampfphase befindliche Anteil der Metallhalogenide ist nicht gleichmäßig über die Bogenlänge verteilt. Die Emission der Alkali- und SE-Jodide konzentriert sich im unteren Drittel der Lampe, während im oberen Teil bis zur oberen Elektrode hauptsächlich Emission von Hg und TI beobachtet wird. In diesem Zustand besitzt die Lampe eine relativ geringe Farbwiedergabe und eine relativ geringe Lichtausbeute. Hinzu kommt, dass sich die Farbtemperatur in vertikaler Brennlage wesentlich von der bei horizontaler Brennlage unterscheidet, und zwar um bis zu 1500 K.

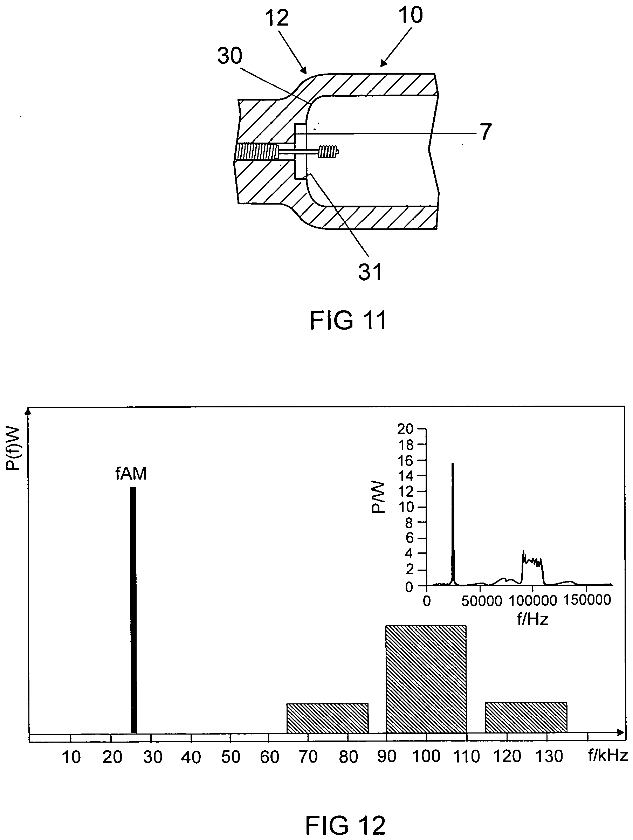

Durch das Aufprägen einer Amplitudenmodulation mit einer starren Frequenz fAM von ca. 25 kHz mit AM-Grad von 10-30 % wird entsprechend der schematisierten Fig. 12 (kleines Bild zeigt die reale Messung) ein elektrisches Leistungsspektrum in der Lampe bei einer Sweep-Rate von 130 s-1, also über die Zeitspanne von 7,7 ms, im Bereich 20 bis 150 kHz erzeugt. Der Leistungsanteil im Bereich der AM-Frequenz (25 kHz) wirkt anregend auf die zweite akustische longitudinale Resonanz f002.

Höhere Ordnungen werden erfolgreich unterdrückt. Die nahezu ausschließliche Anregung der zweiten longitudinalen akustischen Resonanz erfordert einen ausreichenden Gütefaktor der Lampe als Hohlraumresonator (sog. Resonatorgüte). Diese Güte kann durch den für eine stabile Aufrechterhaltung der zweiten longitudinalen akustischen Resonanz in vertikaler Brennlage notwendigen Leistungsanteil im für die Anregung genutzten Spektralbereich des elektrischen Leistungsspektrums charakterisiert werden. Typisch liegt dieser Wert bei mindestens ca. 10 bis 20 % der Lampenleistung. Für einen stabilen Betrieb sollte allerdings dieser Mindestwert ausreichend überschritten werden. Um Schwankungen der Lampencharakteristika bei einer größeren Anzahl von Lampen möglichst klein zu halten, empfiehlt sich daher eher ein Wert von etwa 15 bis 25 % der Lampenleistung.

In Tab. 1 sind einige Daten für verschiedene Lampen zusammengefasst.

Tab. 1

| Innenkonturen für keramische Metallhalogenidlampen | mm | mm | mm | mm | mm | [%] | [%] | [%] |
|---|---|---|---|---|---|---|---|---|
| Erfindungsgemäße Parameter | IL | ID | LINS | ERL | LRD | LINS/IL | LRD/ LINS | LRD/ ERL |
| Zyl. Innenkontur 70W | 19 | 4 | 2 | 3 | 0 | 10,53 | 0 | 0,00 |
| Zyl. Innenkontur. M. abge. E. R = 50% IR_70W | 19 | 4 | 2 | 3 | 1 | 10,53 | 50 | 33,33 |
| long_taper_ended_contour _70W | 19 | 4 | 2 | 3 | 1,5 | 10,53 | 75 | 50,00 |

In Figur 2 ist ein äußerer konischer Bereich 9 am Ende 12 des Entladungsgefäßes schräg verlaufend mit einem Winkel von etwa 35° gezeigt. Die Schräge läuft etwa vom Punkt P bis zu einer Entfernung 0,25 LRD vom Ende des Entladungsgefäßes. Dort ist der Durchmesser IDE auf 0,5 ID reduziert. Dieser Wert bleibt für den rohrförmigen inneren Bereich 15 ganz am Ende des Entladungsgefäßes konstant. Das Entladungsgefäß endet mit einer Stirnfläche 7 quer zur Lampenachse oder zumindest im wesentlichen quer zur Lampenachse. Diese Stirnfläche 7 enthält zentral eine Bohrung 8 für die Elektrode und Durchführung.

In Figur 3 ist die Schräge am Ende 12 des Entladungsgefäßes 10 durch einen konkaven Bereich 19 mit einem Windel von etwa 35° realisiert. Die Schräge läuft etwa vom Punkt P bis zu einer Entfernung 0,30 LRD vom Ende des Entladungsgefäßes. Danach folgt ein Bereich 20, in dem der Durchmesser durch eine geringe konische Schräge noch weiter reduziert bis zu einem kleinsten Wert von IDE von 0,4 ID. Die Durchführung ist hier ein zylindrisches Cermet-Teil.

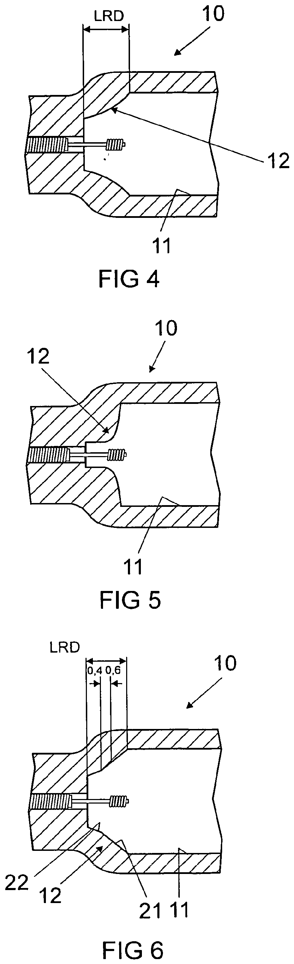

In Fig. 4 ist ein Entladungsgefäß 10 gezeigt, bei dem die Verjüngung im Bereich LRD durchgängig trompetentrichterförmig ist. Der Bereich LRD stößt am Punkt P an den Mittenbereich. Der Endenabschnitt 12 verengt sich auf einen minimalen Durchmesser IDE von 0,6*ID.

In Figur 5 ist ein Ausführungsbeispiel des Entladungsgefäßes gezeigt, bei dem der Endbereich 12 über nahezu seine gesamte radiale Breite IR konvex gekrümmt ist.

Figur 6 bis 8 zeigt verschiedene konische Konturen mit unterschiedlicher Neigung des Endbereichs 12. Bei Figur 6 ist eine konische Fläche mit einer Neigung von $\alpha$ = 31° als äußerer Bereich 21 des Endes 12 verwendet, die sich vor allem über die axiale Länge von 0,4 bis 0,6 LRD, dem besonders kritischen Bereich, nicht ändert. Der innere Bereich 22 ist ebenfalls konisch aber mit geringerer Neigung, die allenfalls die Hälfte, hier 15 °, der Neigung des äußeren Bereichs ausmacht.

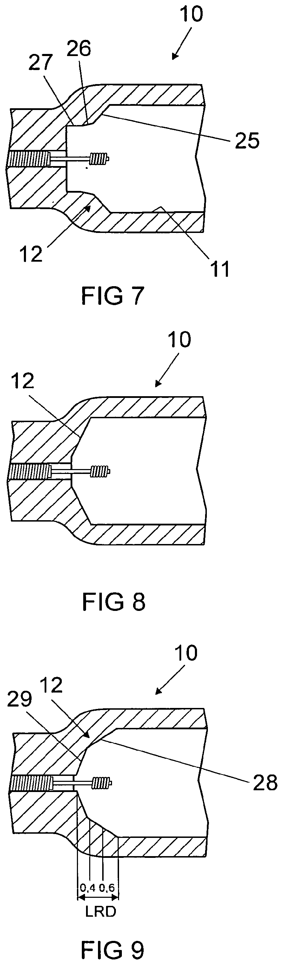

Figur 7 zeigt eine Kontur des Endbereichs, wobei dieser in drei Abschnitte mit unterschiedlichem Neigungswinkel $\alpha1$ und $\alpha2$ gegliedert ist. Der äußerste Abschnitt 25 hat eine starke Neigung mit $\alpha1$ = 31° und der mittlere Abschnitt 26 eine schwache Neigung mit $\alpha2$ = 16°. Sie stoßen bei 0,5*LRD aneinander.

Der innerste Abschnitt 27 ist rohrförmig.

In Figur 8 besitzt das Entladungsgefäß 10 eine Kontur des Endbereichs 12, bei der einheitlich eine konische

Fläche mit $\alpha$ = 45° verwendet wird, die sich über die volle axiale Länge des Bereichs LRD erstreckt, einschließlich von 0,4 bis 0,6 LRD, dem besonders kritischen Bereich.

In Figur 9 besitzt das Entladungsgefäß 10 eine Kontur, bei der der konvexe Endbereich 12 in drei konische Abschnitte mit unterschiedlichem Neigungswinkel $\alpha$1 und $\alpha$2 und $\alpha$3 gegliedert sind. Der äußere erste Abschnitt 28 hat eine schwache Neigung mit $\alpha$1 = 23° und der innere zweite Abschnitt 29 eine starke Neigung mit $\alpha$2 = 37°. Sie stoßen bei 0,35*LRD aneinander, also erst nach dem kritischen Bereich von 0,4 bis 0,6 LRD.

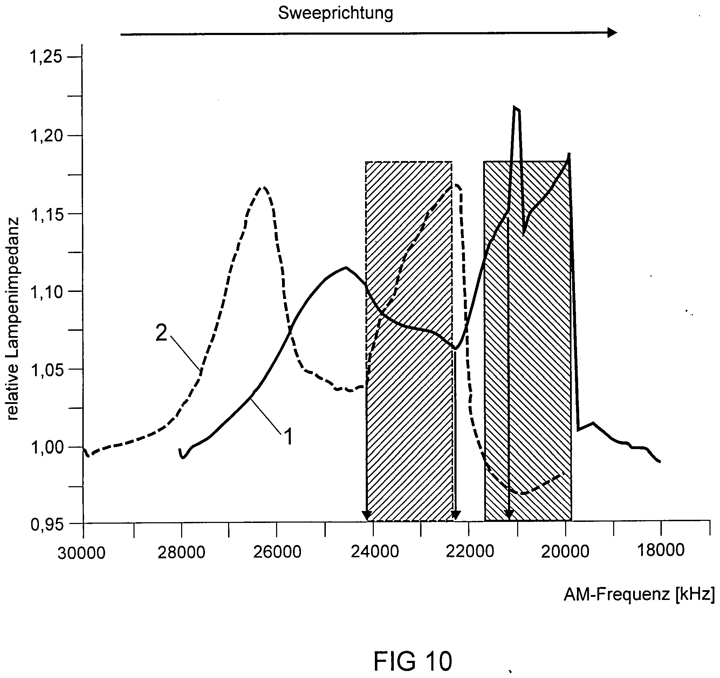

In Figur 10 ist das Impedanzverhalten bei konischer Innenkontur wie Figur 2, die einen stabilen Betrieb, und bei üblicher rein zylindrischer Innenkontur, die nur einen instabilen Betrieb ermöglicht, verglichen. Dabei ist die relative Lampenimpedanz als Funktion der AM-Frequenz in kHz während des Sweepens angezeigt. Basis ist die zweite longitudinale Frequenz. Der AM-Grad ist 24%. Eine übliche Lampe, deren Impedanzverlauf als Kurve 1 dargestellt ist, zeigt im Bereich von etwa 22 bis 20 MHz instabile Resonanzerscheinungen (Peak), während die stabilisierte Lampe (Kurve 2) mit verbesserter Innenkontur (Kurve 2) einen stabilen Anstieg im modulierten Bereich (hier etwa 24 bis 22 MHz) erkennen lässt, der sich sehr gut für einen optimierten Betrieb verwenden lässt.

In Figur 11 ist ein Ausführungsbeispiel eines Entladungsgefäßes 10 gezeigt, das im Endbereich 12 einen ersten äußeren konkaven Abschnitt 30 und einen zweiten inneren geraden rohrförmigen Abschnitt 31 aufweist.

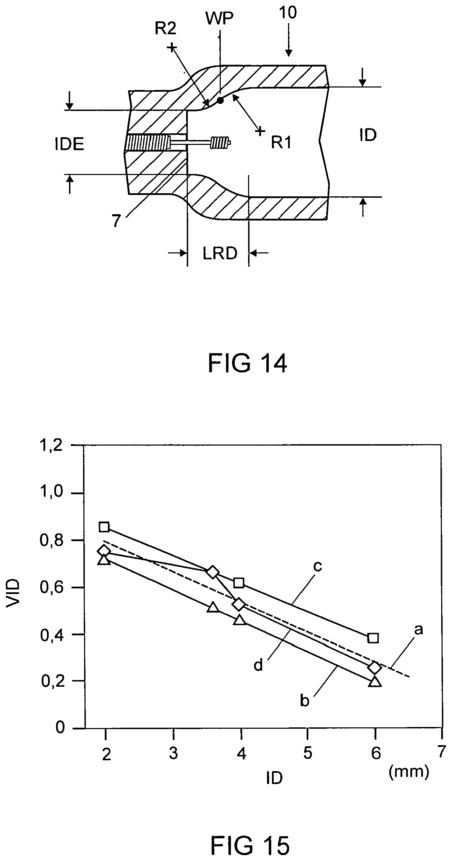

Wesentlich ist immer das Vorhandensein einer Stirnfläche am Ende des Entladungsgefäßes, die quer zur Lampenachse steht. Dadurch lassen sich niedrige Harmonische gezielt anregen und höhere Harmonische gezielt unterdrücken. Um dieses Ziel zu erreichen ist es besonders günstig, wenn die schräge Übergangsfläche zwischen Innenwand und Stirnfläche keine Ecken und Kanten besitzt, sondern glatt und kontinuierlich ist. Statt Kanten sollten immer definierte Übergangsradien vorhanden sein. besonders geeignet ist eine Form gemäß Figur 14, bei der ein Entladungsgefäß 10 mit einem Endbereich LRD gezeigt ist, dessen Innendurchmesser sich derart auf den Wert IDE an der Stirnfläche 7 reduziert, dass die Innenkontur zunächst konkav gekrümmt ist, mit einem Krümmungsradius R1 und anschließend konvex gekrümmt ist mit einem Innenradius R2 (schematisch in Figur 14 angedeutet). Zwischen beiden Abschnitten liegt ein Wendepunkt WP.

In Figur 15 ist ein bevorzugter Zusammenhang zwischen dem Innendurchmesser ID des Entladungsgefäßes und dem reduzierten Durchmesser DIE als Funktion des Innendurchmessers (in mm) gezeigt. Das Verhältnis VID = IDE/ID sollte bei kleinen Durchmessern ID eher relativ hoch liegen aber bei großen Durchmessern ID eher relativ niedrig liegen. Die gestrichelte Linie a ist die optimale Bemessung, die Linien b und c geben eine Abweichung davon an, die noch zu keiner nennenswerten Verschlechterung in der Funktionsweise führt. Die Messwerte auf der Kurve d sind konkrete Realisierungen von Lampen, bei denen die optimale Funktionsweise mit Unterdrückung höherer Harmonischer bestätigt wurde.

Ein geeignetes Betriebsverfahren für derartige Hochdruckentladungslampen nutzt den Resonanzbetrieb, unter Benutzung einer hochfrequenten Trägerfrequenz, die insbesondere mittels Sweepsignal (FM) frequenzmoduliert ist, und die gleichzeitig amplitudenmoduliert (AM) wird, wobei zunächst eine Grundfrequenz der AM definiert wird, wobei die Grundfrequenz der AM $f_{2L}$ vom zweiten, longitudinalen Mode abgeleitet ist.

Dabei kann nach dem Zünden der Lampe und Abwarten einer Karenzzeit die Einstellung der Farbtemperatur bei vorgegebener Leistung dadurch erfolgen, dass die Amplitudenmodulation periodisch zwischen mindestens zwei Zuständen wechselt.

Die Frequenz des Sweepsignals kann von den ersten azimutalen und radialen Modi abgeleitet werden. Insbesondere kann ein Controller die Grundfrequenz des AM-Signals einstellen.

Besonders gute Ergebnisse zeigen sich, wenn ein AM-Grad zur Anregung der zweiten longitudinalen akustischen Resonanz von 10 bis 40 % verwendet wird, insbesondere 18 bis 25 %. Vorteilhaft wird die anregende AM-Frequenz zwischen $f_{2L}$ und $f_{2L}$ - 2 kHz gewählt.

Prinzipiell kann sich die Amplitude eines fester AM-Grads stufenartig, abrupt, allmählich oder differenzierbar mit bestimmter Periodizität ändern.

Ein typisches Betriebsverfahren geht aus von einem Betrieb mit einer Trägerfrequenz im mittleren HF-Bereich von 45 bis 75 kHz, typisch 50 kHz, der bevorzugt eine Sweepfrequenz als FM-Modulation aufgeprägt ist, deren Wert ausgewählt ist aus einem Bereich von 100 bis 200 Hz. Diesem Betrieb wird eine Amplitudenmodulation aufgeprägt, die durch mindestens eine der beiden Parameter AM-Grad und Zeitdauer der AM, also einem Puls-Pausen-Verhältnis sowie zeitgesteuerter AM-Tiefe AM(t) charakterisiert. Evtl. kann das Einsetzen der AM bzw. deren Manipulierung erst nach einer Aufwärmphase einsetzen. Der AM-Grad ist definiert als

$$\text{AM-Grad} = (Amax-Amin) / (Amax+Amin).$$

Dabei ist A die Amplitude.

Neben dem Verfahren beinhaltet die Erfindung Vorschaltgeräte, in welches die beschriebenen Prozeduren implementiert sind.

Im einzelnen wird bei hocheffizienten keramischen Metallhalogenidlampen mit großer Innenlänge ein Aspektverhältnis (innere Länge/innerer Durchmesser) des Entladungsgefäßes von mindestens 2,5 bevorzugt, insbesondere IL/ID =3,5-5,5. Dabei wird mit mittel- bis hochfrequentem AM-Betrieb über den Amplituden-Modulationsgrad die Intensität einer oder mehrerer longitudinaler Moden (bevorzugt die zweite) angeregt. In diesen Moden wird die Füllung in den Zentralbereich des Entladungsgefäßes transportiert und somit die Füllungsverteilung im Entladungsgefäß entlang des Bogens eingestellt. Dies ist insbesondere bei vertikal oder schräg (> 55° Neigungswinkel) betriebenen Lampen besonders wichtig. Hierdurch verändert sich die Zusammensetzung des Dampfdruckes und auch die spektrale Absorption der abgelagerten Füllungsbestandteile. Die Modulationsfrequenz (Grundfrequenz der AM) zum Anregen der longitudinalen Moden liegt typischerweise im Frequenzbereich von 20-35 kHz. Bei einer Trägerfrequenz von typisch 45-75 kHz wird dazu eine FM (Frequenzmodulation) mit Sweep-Moden im Bereich von ca. 100-200 Hz durchgeführt.

Zur Steuerung kann nun sowohl der AM-Grad allein als auch die Zeitdauer der aufmodulierten AM-Frequenz im Sinne von Puls- und Pausenzeiten verwendet werden. Über diese Parameter AM-Grad und Puls/Pausenverhältnis, also dem Verhältnis zwischen der Zeit T, in der die AM eingeschaltet ist und der Zeit, in der die AM ausgeschaltet ist, abgekürzt T(AM-on)/T(AM-off), sowie außerdem einer zeitgesteuerten variablen Amplitudenmodulationstiefe AM(t), also einer Überstruktur des AM-Grads, lässt sich in großen Bereichen die Farbtemperatur bei hoher Lichtausbeute und gleichbleibender Lampenleistung ändern.

In Fig. 13 ist ein Prinzipschaltbild eines zugehörigen EVGs gezeigt. Es weist folgende essentielle Komponenten auf:

Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.

Weiterhin wird die Scan-Rate sowie Verweildauer am jeweiligen Frequenzpunkt beim Durchlaufen von Frequenz-Scans sowie die Festlegung von Pausenzeiten zwischen aufeinanderfolgenden Prozedurschritten gesteuert.

Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt)

Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärm-bzw. Prägephase, bzw. Wiederholung von Prägephasen mit anderen Abstimmparametern .

Hier ist ein Schaltungsteil zur hinreichend genauen Messung von Strom und Spannung am EVG-Ausgang(Lampe) implementiert. Über diesen werden über einen A/D-Wandler die Messwerte für die Verarbeitung im Controller weiterverarbeitet. Die anfallenden Daten werden für weitere Auswertungsprozeduren in einen Daten-Speicher geschrieben.

Lampe: Hochdruck-Entladungslampe (HID lamp)

FM-Modulator: Hochleistungsfrequenzmodulator

AM-Modulator: Analoger variabler Hochleistungsmodulator mit Möglichkeit der Kontrolle sowohl der Frequenz fAM als auch des AM-Grades AMI

AM-Signal-Generator: Digital oder Spannungskontrollierter Oszillator

FM-Signal Generator: Digital oder Spannungskontrollierter Oszillator

Power Supply (Netzteil): Rail Voltage Generator

Controller: Zentrale Kontrolle aller Einheiten

Im folgenden werden mehrere Ausführungsbeispiele des Betriebsverfahrens erläutert. Grundsätzlich gilt: der Betrieb erfolgt unter Benutzung einer hochfrequenten Trägerfrequenz, die insbesondere mittels Sweepsignal (FM) frequenzmoduliert ist, und die gleichzeitig amplitudenmoduliert (AM) wird, wobei zunächst eine Grundfrequenz der AM definiert wird, wobei die Grundfrequenz der AM f2L vom zweiten, longitudinalen Mode abgeleitet ist. Insbesondere erfolgt nach dem Zünden der Lampe und Abwarten einer Karenzzeit die Einstellung der Farbtemperatur bei vorgegebener Leistung dadurch, dass die Amplitudenmodulation periodisch zwischen mindestens zwei Zuständen wechselt.

Dabei wird vorteilhaft die Frequenz des Sweepsignals von den ersten azimutalen und radialen Modi abgeleitet.

Der einfachste Fall ist der Betrieb mit der reinen Trägerfrequenz. Im Lampenbetrieb wird diese Frequenz frequenzmoduliert (FM) und dafür typischerweise sägezahnartig gesweept. Dies bedeutet einen AM-Grad = 0 und führt im Vertikalbetrieb zur bewusst eingestellten Segregation, also der Entmischung des Plasmas. Im Bilde der oben eingeführten Sprache bedeutet dies einen Dauerbetrieb, also T(AM-off) = ∞.

Ein anderes Beispiel ist ein AM-Dauerbetrieb, also T(AM-on) = ∞. Dabei wird eine maximale und minimale Amplitude Amax und Amin eingehalten. Diese AM läuft über die ganze Betriebsdauer.

Oft wird auch eine Mischung aus beiden Zuständen oder eine geeignete Modifizierung verwendet. Dabei wechseln im einfachsten Fall Abschnitte mit AM-on und Zeiträume mit AM-off einander regelmäßig oder nach Bedarf ab. Die Zeitdauer einer Zufuhr von AM-on ist T(AM-on). Die Zeitdauer einer Zufuhr von AM-off ist T(AM-off). Beide Phasen wechseln einander ab. Es hat sich gezeigt, dass insbesondere ein relativ niedriges Verhältnis T(AM-on)/T(AM-off), der einem kontinuierlichen AM-Betrieb mit einem "äquivalenten" AM-Grad von ca. 15-35% entsprechen würde, zur Aufhebung der Segregation im Vertikalbetrieb führt. Figur 6 zeigt die Aneinanderreihung von Zeitdauern mit AM-off und AM-on schematisch.

Bevorzugt liegt das Verhältnis T(AM-on)/T(AM-off), also das Puls-Pausen-Verhältnis, zwischen 0 und T(f(AM)) und Tsweep.

Statt dessen kann jedoch einer gegebenen AM nochmals eine Struktur aufgeprägt werden, entweder eine Unterstruktur, beispielsweise im Sinne einer Dämpfung, oder eine Überstruktur, beispielsweise rampenförmig, trapezförmig oder sinusförmig. Auch hier lässt sich ein äquivalenter AM-Grad definieren. Dies kann mit oder bevorzugt ohne Totzeiten AM-off erfolgen. In diesem Sinne ist auch die obige dargestellte getaktete AM eine Überstruktur mit Rechteckform.

Bei geeigneter Wahl des "äquivalenten" AM-Grads wird in einen vorgegebenen akustisch eingeschwungenen Zustand der Gasentladungssäule bzw. Plasma akustische Leistung in den anregenden Zustand entweder getaktet und/oder gesteuert durch die Stärke der akustischen Resonanz (bzw. schallintensitätsgesteuert) eingekoppelt. Hierdurch werden Füllungstransportprozesse in der Lampe derart gesteuert, dass mit bestimmten Überstrukturen jeweils bestimmte Farbtemperaturen der Metallhalogenidlampe verbunden sind.

Aufgrund der Dämpfung der Schallwellen ergeben sich typische Zeitdauern sowohl für den Einschwingvorgang, als auch für die maximalen Pausenzeiten T(AM-off) und die Dynamik der Amplitudenmodulationstiefe (AM-Grad), die den anregenden Stromsignalen aufgeprägt werden können.

Die AM-Tiefe ist bestimmt durch folgende Faktoren:

T1 = Periodendauer der Trägerfrequenz;
τ(AM_damp) = Dämpfungszeit bei beispielsweise gedämpftem AM-Signalzug;
T2 = Periodendauer der Amplitudenmodulationsfrequenz;
AM-Grad = Amplitudenmodulationsgrad (typisch 15-35%);
T(AM-on) = Taktdauer der eingeschalteten AM;
T(AM-off) = Pausendauer der AM.

Als Beispiele sind gedämpfte und ungedämpfte Verläufe möglich. Teilweise wird statt des Begriffs AM-Grad auch der Begriff AM-Index verwendet.

Das Verhältnis T(AM-on)/T(AM-off) kann dabei nahezu beliebig sein, wobei ein Minimalwert der bevorzugten Zeitspannen für T(AM-on) typisch bei 5 bis 10 Periodendauern (entsprechend 0.2-0.4 ms) der AM-Frequenz, die typisch bei 20 bis 40 kHz, beispielsweise bei 24.4 kHz, liegt. Dadurch wird ein Einschwingen der Gasentladungssäule in eine Eigenresonanz gewährleistet.

Die Phase des Signals AM-on ist bevorzugt angekoppelt an die Phase des AM-Signals, jedoch ist diese Forderung nicht absolut notwendig, falls die Zeitdauer des Signals AM-on, also der Wert T(AM-on) genügend groß ist. Es ergeben sich somit minimale Duty-cycles der AM von typ. 0.2/20 = 1/100. Als Duty-cycle ist das Verhältnis T(AM-on)/Tg definiert, wobei Tg oben definiert ist.

Ein weiteres Beispiel für ein konkretes Betriebsverfahren ist in verschiedene Betriebsphasen unterteilt. Die Lage der Resonanz f002 in horizontaler Brennlage wird für eine individuelle Lampe als erstes ermittelt. Dies kann durch verschiedene Verfahren vorab einmalig oder immer wieder on-line im Betrieb der Lampe erfolgen, z. B. durch Messung der Lampen-Impedanz im Betrieb mit Rechteckstrom-Einprägung und überlagertem sinusförmigen Signal, wobei beispielsweise die Amplitude des sinusförmigen Anteils etwa 5-15 % der Stromamplitude bei Variation der Frequenz des Sinus-Signals betragen soll.

Für ein zuverlässiges Funktionieren des Verfahrens ist es wünschenswert, dass für eine vorgegebene Geometrie des Entladungsgefäßes ein enger Toleranzbereich für die Innenlänge IL von typisch ≤ 1 % x IL vorliegt. Die Innenlänge stellt diejenige Dimension der Lampe dar, die die zweite longitudinale akustische Resonanz definiert, welche für eine optimale Durchmischung des Bogenplasmas, insbesondere bei vertikaler Brennlage, angeregt werden muss.

In vertikaler Brennlage ergeben sich aufgrund der damit verstärkt verbundenen Entmischung der Füllungsbestandteile stark veränderte Schallgeschwindigkeiten, die dazu führen, dass nach dem Anlaufen der Lampe die Frequenz

der akustischen zweiten longitudinalen Resonanz (f002_vert) gegenüber der Frequenz bei horizontaler Brennlage, abgekürzt als f002_hor, deutlich verschoben ist, und zwar meist zu höheren Frequenzen hin. Im Laufe der Zeit ändert sich dann bei erfindungsgemäßer Betriebsweise, die eine allmähliche Durchmischung erreicht, diese Resonanzfrequenz, bis sie wieder annähernd derjenigen bei horizontalem Betrieb, also f002_hor, entspricht.

**[0102]** Dabei zeigen sich aufgrund der vor allem bei vertikalem Betrieb auftretenden Segregation Abweichungen der effektiven Schallgeschwindigkeit bis zu 30 %, meist von ca. 10 bis 25 %, zu höheren Werten hin, verglichen mit dem durchmischten Zustand in horizontaler Brennlage. Beispielsweise werden Abweichungen der effektiven Schallgeschwindigkeiten bei Hg/Ar-Puffergasgemischen von ca. 15 bis 20 % gegenüber dem durchmischten Betrieb gefunden. Ein konkreter Messwert lag z.B. bei 550 m/s gegenüber 464 m/s.

**[0103]** Die akustische Resonanzfrequenz der i-ten longitudinalen akustischen Resonanz ist in einem Entladungsgefäß der Innenlänge IL allgemein gegeben durch das Produkt:

$$f00i = i * cl /(2*IL) \;;$$

für i = 2 (zweite akustische Resonanz) gilt also:: f002 = cl/IL.

**[0104]** Dabei ist cl die effektive (longitudinal wirksame) Schallgeschwindigkeit cl, wobei gilt

$$cl = (R*\kappa*T/M)1/2$$

mit R: allg. Gaskonstante, κ: Kompressibilität, T: mittlere Plasma-Temperatur, M: mittlere molare Masse des Plasma-Gases; IL = effektive axiale Länge des Entladungsgefäßes).

**[0105]** Für azimutale akustische Resonanzen gilt der Zusammenhang zwischen Röhrenradius R und einer effektiven (azimutal wirksamen) Schallgeschwindigkeit $c_{az}$ :

$$fi00 = a_{i0}\, c_{az} /(2*\pi*R)\ ,$$

mit $a_{i0}$ für i = 1,2,... = Besselkoeffizient: $a_{10}$ = 1.84 ; $a_{20}$ = 3.05 ; $a_{30}$ = 4.2 usw.

**[0106]** Für die radialen akustischen Resonanzen gilt der Zusammenhang zum Röhrenradius R und einer effektiven radial wirksamen Schallgeschwindigkeit cr :

$$f0i0 = a_{0i}\, c_r /(2*\pi*R)\ ;$$

mit $a_{0i}$ für i = 1,2,... = Besselkoeffizient: $a_{0i}$ = 3.83 ; $a_{02}$ = 7.016; usw.

**[0107]** Zur Anregung dieser Schallresonanzen im geschiossenen, annähernd zylindrischen Lampenkolben sind die sich ausbildenden elektrischen Leistungsschwingungen maßgeblich. Das heißt, bei Anregung mit sinusförmigen Stromformen mit der Frequenz fI hat die Leistungsfrequenz fP die Frequenz:

$$fP = 2* fI.$$

**[0108]** Die Betriebsart geht in einem anderen Ausführungsbeispiel aus von einer elektrischen Trägerfrequenz v im für Lampenanwendungen typischen HF-Bereich, beispielsweise v = 50 kHz, der eine Sweepfrequenz fFM als Frequenzmodulation aufgeprägt ist, deren Wert ausgewählt ist aus einem Bereich, der sich von der ersten azimutalen bis zur ersten radialen Resonanz erstreckt. Bevorzugt ist insbesondere ein Wert für fFM, der in der Nähe des Mittelwertes, insbesondere direkt beim Mittelwert, zwischen beiden Resonanzen liegt. Ein Anhaltspunkt ist ein Sweepen, das um bis zu 10 % von der Trägerfrequenz abweicht. Die Sweeprate liegt typisch im Bereich von 100 bis 1000 s-1.

**[0109]** Der Sweep-Betrieb vorzugsweise rampenförmig mit an- oder absteigender Frequenz ausgeführt.

**[0110]** Diese Betriebsart nutzt den Effekt der Bogenstabilisierung auf die zentrale Achse des Entladungsgefäßes in vertikaler sowie auch in horizontaler Brennlage durch Anregung von zentrierenden Gasschwingungen um den Bogenkern.

**[0111]** Dieser grundsätzlichen Stromsignalform wird, evtl. nach Einhalten einer Karenzzeit (Aufwärmen der Lampe), außerdem eine Amplitudenmodulation AM aufgeprägt, deren Grundfrequenz die zweite longitudinale Resonanz f002hor in horizontaler Brennlage ist. diese Grundfrequenz ist die Ausgangsbasis der Regelung.

Es zeigt sich, dass im vertikalen Betrieb die Resonanzfrequenzen bei den hier benutzten Innendimensionen des Entladungsgefäßes - ein typischer Wert ist 12 bis 24 mm -- um bis zu 5 kHz gegenüber der horizontalen bzw. durchmischten Bedingung verschoben sind. Die hier beschriebene Vorgehensweise führt zuverlässig zur gewünschten Betriebsweise.

Mehrere Ausführungsformen eignen sich als Lösungswege zur zuverlässigen Einstellung einer bestmöglichen Durchmischung des Lichtbogenplasmas und einer weitgehenden Aufhebung der Segregation. Mehrere Betriebsverfahren zur Einstellung einer AM für die eine Durchmischung am besten bewirkende zweite horizontale longitudinale Resonanz f002 in beliebiger Brennlage, bevorzugt bei einer FM im Sweep-Betrieb bei oder im Bereich eines Wertes von ca. 0,9 bis 1,1 x (f100+ f010)/2, werden hier im weiteren angegeben. Dieser Sweepbereich von 10 % fSW entspricht in etwa einem Fenster von 5 kHz nach oben und unten. Die Frequenz fSW kann im Bereich der ersten azimutalen und radialen Resonanz f100 und f010 gewählt werden, bevorzugt in der Nähe deren Mittelwerts mit einer Abweichung bis zu 10 %, also 10% x (f100+ f010)/2).

Voraussetzung für ein Verfahren zur Einstellung der AM-Frequenz für optimale Durchmischung des Bogenplasmas in jeder Brennlage ist zunächst die Bestimmung und Speicherung der Lage der zweiten longitudinalen Resonanzfrequenz f002 in praktisch immer schon durchmischter horizontaler Brennlage. Zur Einstellung eines Grundbetriebes mit dieser Frequenz muss bei jeder Lampe zunächst individuell die dort vorliegende Geometrie des Entladungsgefäßes und Zusammensetzung des Puffergases auf die akustischen Resonanzen hin charakterisiert und untersucht werden, so dass neben der zweiten longitudinalen Resonanzfrequenz f002 auch die erste azimutale Resonanzfrequenz f100 und die erste radiale Resonanzfrequenz f010 bekannt sind. Außerdem wird daraus der mittelwert der beiden Frequenzen (f100+ f010)/2 berechnet und gespeichert.

In einer ersten Ausführungsform lässt sich eine Prozedur zum Einschwingen in den günstigsten durchmischten Betriebszustand dadurch realisieren, dass nach dem Zünden der Bogenentladung, unter Einhaltung einer Aufwärmphase (Karenzzeit bis Zeitpunkt t1) von ca. 30 bis 80 sec, bevorzugt etwa 60 sec, innerhalb einer Prägungsphase von ca. 60 bis 150 sec, die Grundfrequenz fAM der Amplitudenmodulation AM auf einen Wert vom 1,15 bis 1,25-fachen der Frequenz f002_hor eingestellt wird. Davor kann die AM-Frequenz beliebig gewählt sein, bevorzugt ist aber f002_hor voreingestellt. Auch der AM-Grad kann zuvor beliebig in einem Bereich von 0 bis 25 % eingestellt sein. Zum Zeitpunkt der Erhöhung der Grundfrequenz fAM in der Prägungsphase, bevorzugt ist dabei eine um 18-20% erhöhte Frequenz gegenüber f002_hor eingestellt, wird der AM-Grad auf 15 bis 30 % eingestellt. Bevorzugt wird dabei die Amplitudenmodulation auf ca. 15-25% Amplitudenmodulationsgrad eingestellt.

Die grundsätzliche Lösung besteht im geregelten Erkennen des optimalen Frequenzpunktes fopt der AM und des passenden Signalpegels AMI des AM-Grades für die Durchmischung des Metallhalogenidplasmas einer mittels akustischer longitudinaler Resonanzen gesteuerten Metallhalogenidentladungslampe sowie der Bereitstellung eines elektronischen Vorschaltgeräts zum Betrieb im optimal gemischtem Modus.

Es zeigt sich , dass -- ausgehend von höheren Frequenzen, beispielsweise 1,25 x f002hor, und hin zu niedrigeren Frequenzen -- beim sukzessiven Überstreichen des Frequenzbereiches ΔF der AM-Frequenz fAM, in dem eine Durchmischung des segregierten, wenig durchmischten Metallhalogenidplasmas erreicht werden kann, sich ein charakteristisches Verhalten der Lampenimpedanz Z ausbildet, indem eine lokale Überhöhung von Z auftritt.

Der AM-Grad ist ein Maß für die jeweilige elektrische Leistung, bezogen auf die Gesamtleistung, die in die Anregung von longitudinalen Resonanzen umgesetzt wird. Wird der AM-Grad schrittweise erhöht, z. B. in Schritten von ca. 2.5 %, so erhält man jeweils bei gegebenem AM-Grad beim Durchfahren des Frequenzbereiches ΔF ein charakteristisches Verhalten der Lampen-Impedanz.

Das Verhalten der Lampenimpedanz, Z(fAM) in Abhängigkeit von der Frequenz fAM über den Frequenzbereich ΔF wird als Funktion des AM-Grads aufgenommen und als Kennlinienfeld gespeichert. Es zeigen sich dabei mit Zunahme des AM-Grads zunächst ein und dann zwei, u.U sogar mehrere als Funktion von fAM aufeinanderfolgende dynamische Extrema der Lampenimpedanz, die sich im Verlauf der schrittweisen Erhöhung des AM-Grades charakteristisch ausbilden und verschieben.

Als Betriebsparameter kann insbesondere anstelle des Amplitudenmodulationsgrads auch der Leistungs-Signalpegel einer die Durchmischung der Metallhalogenide enthaltenden Entladung steuernden Signalfrequenz dienen, beispielsweise der Signalpegel einer linearen Überlagerung , die eine gemischte longitudinal-azimutale Resonanz hervorruft, die eine ähnliche verstärkte Durchmischung des Bogen-Plasmas hervorruft wie die zweite longitudinale Resonanz.

Das Verfahren ist in mehrere Schritte gegliedert und besteht aus mindestens zwei Schritten.

Der erste Schritt ist ein sukzessives Abfahren (Scannen) eines relativ großen Frequenzintervalls der Amplitudenmodulation (fAM). Der Scanbereich liegt zwischen einem oberen Startpunkt ST und einem unteren Endpunkt SP, so dass die Frequenz des Frequenzstartpunkts ST über dem Endpunkt SP liegt.

Zuvor wird aber in einem Vorbereitungsschritt der Frequenzbereich, innerhalb dessen eine Mischung der Metallhalogenide, erkennbar an einem Maximum der Lampenimpedanz, überhaupt auftritt, grob bestimmt. Dessen Endpunkte werden als FM1 (oberer Endpunkt des mischenden Frequenzbereiches) und FM2 (unterer Endpunkt des mi-

**EP 1 729 324 B1**

schenden Frequenzbereiches) bezeichnet, wobei Frequenzstartpunkt ST und Frequenzendpunkt SP jeweils außerhalb des mischenden Frequenzbereiches liegen. Es ist also für diese Frequenzen die Bedingung ST > FM1 > FM2 > SP zu erfüllen.

Das Auffinden des mischenden Frequenzbereiches als Vorstufe des ersten Schritts kann beispielsweise über ein grobes Scannen mit einem geringen Signallevel der AM (AMI = 5-10%) vorab aktuell bestimmt werden.

In einer anderen Ausführungsform ist dieses Frequenzintervall [ST,SP] für eine Geometrie mit gegebenem Innendurchmesser ID und gegebener Innenlänge IL und einer gegebenen Metallhalogenidfüllung bereits einmal grundsätzlich bestimmt und im zugehörigen elektronischen Vorschaltgerät gespeichert.

Danach erfolgt die Festlegung der Intervallbreite für den ersten Schritt. Typisch sollten sowohl ST als auch SP jeweils bevorzugt mindestens 10 -15% außerhalb des von FM1 und FM2 aufgespannten Fensters liegen (ST $\geq$ 1.10*FM1; SP $\leq$ 0.9*FM2). Der gewünschte Wert kann im Lampensystem, bestehend aus Lampe und elektronischem Vorschaltgerät, vorprogrammiert sein oder als Eingabebefehl angegeben werden.

Eine typische Intervallbreite des Scanbereichs ST-SP für den ersten Schritt ist etwa 8-15 kHz.

Bei einem konkreten Ausführungsbeispiel hat das Entladungsgefäß der Lampe ein Innenmaß von 19 mm Länge und einen Innendurchmesser von 4 mm, das Puffergas ist ein Gemisch Hg-Argon. Hier liegt die optimal mischende Resonanzfrequenz fAM zwischen 22 und 25 kHz. FM1 ist somit 25 kHz und FM2 ist 22 kHz. Hier kann das Intervall von ST = 30 kHz abwärts nach SP = 20 kHz abgefahren werden.

Die Richtung des Frequenz-Scans von der höheren ST zur niedrigeren Endfrequenz SP ergibt sich aus dem Befund, dass sich die akustischen Resonanzen, insbesondere bei Vertikalbetrieb, im segregierten Zustand bei kontinuierlicher Anwendung von Amplitudenmodulation systematisch zu höheren Frequenzen hin verschieben. Dieses Verhalten steht in Gegensatz zur Lehre der US-PS 6 400 100. Weiterhin wurde gefunden, dass durch ein hinreichend langsames zeitlich konstantes Verschieben, insbesondere einer Verschiebungsrate von typisch 0.05-1 kHz/sec, der Anregungsfrequenz fAM des durchmischenden akustischen Frequenzsignals bei hinreichender Signalhöhe mit einem AM-Grad von typisch 10-40 % eine immer bessere Durchmischung des Lampenplasmas erzielt wird und damit die Resonanzfrequenz f002 zu geringeren Frequenzen hin, in Richtung f002hor, verschoben wird.

Ein hervorragend geeigneter Parameter zur Überwachung dieses Sachverhalts ist die mittlere Lampenimpedanz Z = Urms/Irms, wie sie bei zeitlich konstanter Verschiebung von fAM auftritt (rms = root mean square).

Eine vollständige Charakterisierung von Z als Funktion der Zeit ist für die optimale Einstellung nicht notwendig. Es genügt als Mindestanforderung eine Messung in der gewünschten Brennlage, insbesondere vertikal, wobei ein einmaliges vollständiges Überfahren des Frequenzbereiches FM genügt und zwar zwischen den Grenzen FM1 und FM2, in denen die Durchmischung auftritt. Bevorzugt wird zur Sicherheit ein größeres Frequenzfenster zwischen dem Frequenzstartpunkt ST und dem Frequenzendpunkt SP gewählt, weil am Endpunkt SP keine wesentliche Plasmadurchmischung, bzw. am oberen Frequenzpunkt ST allenfalls eine geringe Plasmadurchmischung vorliegt.

Die beschriebene Prozedur nutzt die mit fortschreitender Frequenzverschiebung allmählich verbesserte Durchmischung der Metallhalogenide im Plasma, um charakteristische Frequenzen, also insbesondere die Resonanzfrequenz f002, für den Mischungsvorgang zu ermitteln. Es zeigt sich, dass bevorzugt eine konstante Rate der Frequenzverschiebung (Frequenz-Scan) gewählt werden sollte, wobei sich dafür eine optimale Geschwindigkeit in der Größenordnung von 0,1 bis 0,5 kHz/sec finden lässt, die dem normalen Lampenbetrieb gerecht wird. Außerdem empfiehlt sich, dass die Prozedur erst nach einer Aufwärmbetriebsphase von ca. 1 - 3 min angewandt wird.

Je nach Leistung der Entladungslampe kann sich mit der Verbesserung der Gasdurchmischung auch das geändertes Temperaturprofil der Gasentladung sowohl axial als auch radial ändern und damit auch die Isothermie des Entladungsgefäßes verändern. Je nach Wärmekapazität des Entladungsgefäßes muss eine ausreichend langsame Anpassung an die neuen Bedingungen im Plasma bis hin zum Erreichen des thermischen Gleichgewichts erfolgen.

Dies benötigt je nach Form und Volumen des Entladungsgefäßes unterschiedlich lange Zeitspannen.

Wird die untere Frequenz FM2 für die akustisch angeregte Durchmischung des Bogenplasmas unterschritten, tritt eine abrupte Änderung der Lampenimpedanz auf und die Metallhalogenid-Mischung des Bogenplasmas geht wieder in den wenig beeinflussten oder gänzlich unbeeinflussten Zustand über.

Besonders bevorzugt sind folgende Ausführungsformen.

Für alle anwendungsrelevanten Metallhalogenidmischungen, beispielsweise mit Alkalihalogeniden und/oder Seltenerdhalogeniden, insbesondere Jodiden wie den folgenden Komponenten:

Nal bzw. Lil oder Csl und Seltenerd(SE)-Komponenten Cel3, Dyl3, Nal3, Prl3, Hol3, Tml3,Dyl3 sowie evtl. weitere Anteile von Znl2, Inl, TII, Mgl2, Cal2, Hg und Zn, insbesondere bei molaren Anteilen des Alkalihalogenidgehaltes $\leq$ 90 mol-%

wird im wesentlichen folgendes Verhalten beobachtet und es wird folgendes schrittweises Vorgehen für die Auswahl der optimalen Betriebsparameter vorgeschlagen und durch ein automatisches Einstellen in einem entsprechend ausgestatteten elektronischen Vorschaltgerät realisiert.

Schritt1:

Als Signalpegel wird der AM-Grad AMI herangezogen. Der AM-Grad AMI, auch als AM-Index bezeichnet, ist definiert durch

$$AMI = (Umax-Umin)/(Umax+Umin)$$

Umax und Umin ist die maximale und minimale Brennspannung. Der Wert von AMI wird für die Bestimmung der optimalen akustischen Plasmamischung so lange schrittweise erhöht, bis die Lampenimpedanz während des Durchfahrens des mischenden Frequenzbereichs FM statt eines einzigen Maximums mindestens zwei ausgeprägte, charakteristische Maxima ZMAX1 und ZMAX2 zeigt, zwischen denen ein Impedanzminimum ZMIN liegt.

Unter Umständen können Verhältnisse auftreten, die umgekehrt bei erhöhtem Plasmadurchmischungsgrad zu verringerter Lampenimpedanz führen; daher gilt allgemeiner, dass zwischen zwei Extremwerten ZEXTR1 und ZEXTR2 ein inverses Extremum ZINV liegt.

Daher wird vorteilhaft bei der Auswertung der Betrag der Lampenimpedanz, am besten im Vergleich zum annähernd nichtdurchmischten Zustand Zrel, herangezogen, also Z(fAM) ~|Z(fAM)/Zrel|.

Vorteilhaft wird die absolute Lampenimpedanzänderung auf den nur unwesentlich gemischten Zustand an den Frequenzendpunkten ST und SP bezogen, also entweder auf Z(fAM = ST) oder auf Z(fAM = SP). Da beide Werte in etwa gleich groß sind, kann stattdessen bevorzugt auch deren Mittelwert als Referenzimpedanz ZREF = (Z(fAM = ST) +Z(fAM = ST))/2) verwendet werden.

Diese normierte Impedanz kann zur Vereinfachung der Auswertung mit einem beliebigen Faktor k multipliziert sein, so dass gilt:

$$Zn(fAM) = k * | Z(fAM)/Zrel |$$

Sie wird im weiteren als Kenngröße der Impedanz verstanden und daher vereinfacht unverändert als Impedanz bezeichnet.

Im Verlauf der Frequenzänderung der Amplitudenmodulation von ST nach SP ergeben somit bei für die jeweilige Metallhalogenidmischung charakteristische Änderungen der Lampenimpedanz Z(fAM), die ein verstärkt durchmischtes Plasma anzeigen. Bei relativ geringem Alkaligehalt zeigen sich Maxima, während sich für andere Metallhalogenidmischungen mit deutlich erhöhtem Alkaligehalt charakteristische Impedanzabsenkungen bei verstärkt durchmischtem Plasma zeigen, so dass in jedem Fall sich Maxima der Kenngröße Zn(fAM) ausbilden.

Zur Bestimmung der Maxima von Zn(fAM) wird der Modulationsgrad AMI stufenweise erhöht und bei jeweils konstant gehaltenem AMI immer wieder ein Scan über das mischende Frequenzintervall [ST,SP] durchgeführt, bis sich die charakteristischen Impedanzänderungen der Funktion Z(fAM) zeigen. Dabei kann der Modulationsgrad AMI, typisch beginnend bei einem Wert von ca. 5-10 %, in Schritten um jeweils ca. 2-5 % erhöht werden, so dass im Schnitt etwa 4 bis 12 Durchläufe nötig sind. Ein ausreichender Maximal-Wert des AM-Grads liegt normalerweise zwischen 20 und 40 %.

Es hat sich herausgestellt, dass unterhalb der Frequenz des zweiten Impedanzmaximums ZMAX2 bei niedriger Frequenz im Verlaufe der Frequenzverschiebung vom oberen Startpunkt ST zum unteren Endpunkt SP keine Plasmamischung mehr erfolgt. Das heißt, FM2 ist durch die Frequenz, bei der ZMAX2 auftritt, gegeben.

Die Änderung von Z(fAM) nach Überfahren des der unteren Scan-Frequenz SP benachbarten Maximums ZMAX2 bei der Frequenz FM2 ist deutlich höher als im restlichen Scanbereich. Die Ursache ist eine charakteristische Änderung des Temperaturprofils der Bogenentladung. Dieses Verhalten zeigt sich übereinstimmend bei allen Metallhalogenidentladungsplasmen, wobei eine starke Änderung der Lampenimpedanz von typ. 5-20% beim Übergang in den ungemischten Plasmazustand in der Nähe von SP festgestellt werden kann. Diese abrupte Änderung tritt zumindest innerhalb eines Zeitraumes einiger zehntel Sekunden auf.

Das heißt, dass die Kenngröße der Änderung der Impedanz Z mit der Frequenz fAM einen Extrempunkt erreicht, wobei also der Wert dZ(fAM)/dfAM ein negatives Minimum erreicht. Eine Auswertung der Impedanzcharakteristik nach diesem Kriterium kann vorteilhaft darüber hinaus zur Bestimmung der Festlegung der unteren AM-Frequenz FM2 für die Plasmamischung herangezogen werden.

Weiterhin wurde gefunden, dass aus dem Gesamtverhalten der Verschiebung von FM2 als Funktion des AM-Grads AMI der für einen langzeitstabilen Betrieb notwendige AM-Grad, AMI bestimmt werden kann.

Hierzu wird ein Schritt2 angewandt:

Man bestimmt die Verschiebungsrate der Funktion FM2(AMI) im Bereich eines AM-Grads von ca. 5%-35% in typi-

EP 1 729 324 B1

schen Schritten von ca. AMI =2.5% (z.B. 10 Durchläufe). Dabei ergibt sich beim Übergang von der Ausbildung eines einzigen Impedanzextremums zu einer größeren Zahl gleichartiger (typisch zwei) Impedanzextrema eine verstärkte Verschiebung der Frequenz FM2 mit dem AM-Grad. Nach Überschreiten des Bereichs verstärkter Verschiebung zeigt die Funktion FM2(AMI) mit weiter zunehmendem AMI wieder eine deutlich geringere Änderungsrate. Es wird ein AM-Grad AMIopt ausgewählt, der dem Bereich erhöhter Durchmischung beim Auftreten von mehr als einem Impedanzextremum zugeordnet wird. Typischerweise ist dies ein AM-Grad AMIopt der um ca. 3 bis 10 %, insbesondere um 5%, höher liegt als jener AM-Grad, bei dem gerade sich das zweite Impedanzextremum ausbildet.

3.Schritt: Einstellung der Anregungsfrequenz für erhöhte Plasmamischung:

Mit dem in Schritt 2 festgelegten AM-Index AMIopt wird nun beginnend von ST oder mindestens von FM1 in Richtung nach FM2 die AM-Frequenz fAM mit vergleichbarer Frequenzänderungsrate wie in Schritt 1 (typ.0.1-0.5kHz/sec) bis zu einem Frequenzpunkt fAMopt gefahren, der am Frequenzpunkt des Minimums (allgemeiner: des inversen Extremums) der Impedanzänderung $FM2 < FMmin < FM1$ liegt.

Es zeigt sich, dass sich im Bereich zwischen FMmin und FM2 die Durchmischung des Bogenplasmas verbessert. Die stärkste Einschnürung des Bogenprofils wird bei FM2 als symmetrische Ausbildung zweier eingeschürter Bogenbereiche beobachtet. Die stärkste Änderung der Plasmaimpedanz wird nach Unterschreiten des Frequenzpunktes FM2 bei weiterer Frequenzverringerung infolge des abrupten Ausfalls der von außen aufgeprägten, also erzwungenen Durchmischung beobachtet. Dieser Effekt stellt sich sowohl in vertikaler wie horizontaler Brennlage ein.

Für eine stabile Plasmadurchmischung hat sich überraschend die exakte Einstellung auf FM2 als nicht zweckdienlich erwiesen, da Effekte wie die Langzeitdrift und geringfügige Änderungen der Plasmazusammensetzung durch Aufzehrung o.ä. wie auch Änderungen in der Verteilung der Füllungskomponenten sehr leicht zur Störung einer über lange Zeit stabilen effektiven Durchmischung des Plasmas führen können.

Abhilfe schafft hier die Einstellung auf eine etwas höhere Frequenz. Am günstigsten sowohl für die gezielte Einstellung der Farbtemperatur als auch für eine hohe Lichtausbeute sowie für eine hohe Farbstabilität hat sich der Frequenzbereich zwischen der unteren Grenzfrequenz FM2, der das untere Impedanzmaximum ZMAX2 zugeordnet ist, und der etwas höheren Frequenz FMmin, der das zwischen ZMAX2 und ZMAX1 liegende Impedanz-Minimum ZMIN zugeordnet ist, erwiesen.

Der Abstand zwischen der unteren Grenzfrequenz FM2 und FMmin hängt vom AM-Grad ab, er kann folglich in einem gewissen Ausmaß mit Hilfe des AM-Grads eingestellt werden. Je höher der AM-Grad gewählt wird, desto ausgeprägter ist das Impedanzminimum ZMIN und umso größer ist der Abstand zwischen FM2 und ZMIN. Diese Überlegung kann insbesondere zur Festlegung des letztlich gewählten AM-Grads AMopt dienen.

In praktischen Untersuchungen hat sich herausgestellt, dass mit Hilfe des AM-Grads mindestens ein Abstand von 400 Hz, insbesondere bis zu 900 Hz, zwischen der Frequenz FM2 und FMmin eingestellt werden sollte, wodurch Langzeitstabilität über die gesamte Lebensdauer erzielt wird.

Die Erzeugung des Kennlinienfeldes mit den charakteristischen Signalpegeln AMI wie auch mit den charakteristischen Frequenzen und die Bestimmung der Grenzfrequenzen (ST, SP, FM1,2) für akustische Plasmamischung, insbesondere durch die zweite longitudinale Resonanz, wird typischerweise erst nach dem Lampenanlauf, also 1 bis 3 min nach dem Lampenstart, mit einer Frequenzverschiebungsrate von ca. 100 Hz/s bis 1 kHz/s (AM oder HF) mit einer Schrittweite (Auflösung)von 100 bis 200 Hz durchgeführt. Diese Messung kann einmalig nach dem ersten Lampenstart oder auch wiederholt in regelmäßigen Zeitabständen oder bei jedem Lampenstart durchgeführt werden.

Weiterhin erweist sich für eine stabile Langzeiteinstellung die Beachtung folgender Erkenntnisse als vorteilhaft.

Es wurde überraschend gefunden, dass trotz Änderung der Lampenimpedanz nach längerer Brenndauer weiterhin das aktuelle lokale Minimum der Lampenimpedanz ZMIN(a) in der Nähe des beim erstmaligen Lampenstart gefundenen Impedanzminimums ZMIN(i) zu finden ist, so dass ZMIN(i) immer als Anhaltspunkt für eine optimale akustische Plasmadurchmischung benützt werden kann.

Es hat sich gezeigt, dass nach dem erstmaligen Scan weiterhin das Impedanzminimum trotz gewisser Drift durch deutlich langsamere Frequenzänderungsraten von 50-100 Hz/min in Schritten von ca. 50 bis 100 Hz verfolgt werden kann.

Mit dieser Vorgehensweise lässt sich die Farbstabilität der Lampe in einer besonders bevorzugten Ausführungsform des Verfahrens deutlich verbessern. Es wird daher außerdem ein erweitertes, auf dem ersten Verfahren der Schritte 1-3 aufbauendes Betriebsverfahren zur Farbeinstellung von mittels Amplitudenmodulation und HF-sweep betriebenen Hochdruckentladungslampen vorgeschlagen:

Dazu wird als Ausgangspunkt das untere Impedanzmaximum ZMAX2 mit Frequenz FM2 herangezogen, oder auch eine innerhalb des Durchmischungsbereichs befindliche Frequenz, die um mindestens 150 Hz, bevorzugt mindestens 200 Hz, höher als FM2 liegt. Diese Frequenz wird dann in Schritten von 50 bis 150 Hz erhöht und dabei die Lampenimpedanz vermessen. Nach einer Einschwing-Zeitspanne von mindestens 1 min wird die Lampenimpedanz nochmals bei den vorher durchgescannten Frequenzpunkten gemessen und aufgezeichnet, beispielsweise in einem nichtflüchtigen Speicher, in dem die Daten mittels einer Mikroprozessorsteuerung abgespeichert werden.

Nach Überschreiten eines sich einstellenden Minimums der Lampenimpedanz wird die letzte Frequenz unmittelbar vor dem Auftreten des Minimums, also die Frequenz, die in der Schrittfolge der dem Impedanz-Minimum zugeordneten Frequenz unmittelbar vorangeht, eingestellt.

Ein derartiges Einstellverfahren ist sehr zuverlässig, allerdings kann dieses Standardverfahren aufgrund der langen Einstellzeiten pro Frequenzpunkt (ca. 1 bis 5 min) aber relativ lange dauern.

Daher wurden alternativ auch schneller ablaufende Frequenzscans durchgeführt und mit dem sorgfältigen, langsamer ablaufenden Standardverfahren verglichen. Ziel ist dabei, dass trotz der Kürze der Messzeit immer noch eine ausreichende Füllungsablagerung gewährleistet wird, die nahezu den Verhältnissen im Dauerbrennzustand, repräsentiert durch das Standardverfahren, entspricht.

Es zeigt sich, dass auch deutlich schneller durchgeführte Frequenzscans mit Frequenzverschiebungsraten von 100 bis 300 Hz/sec , welche eigentlich keine ausreichende Füllungsablagerung mehr zulassen, zur Bestimmung des optimalen Frequenzpunktes herangezogen werden können. Besonders bevorzugt ist das folgende Verfahren:

Hierzu wird mehrmals, insbesondere mindestens zweimal, mit einer Frequenzverschiebungsrate von 100 bis 300 Hz/sec ein Bereich der Frequenzen fAM abgefahren, ausgehend von einer hohen Frequenz ST, die am oberen Ende des Bereichs der Plasmadurchmischung liegt, bis zu einer niedrigen Frequenz SP, die unterhalb der geringsten Frequenz für Plasmamischung FM2 liegt. Eine typische Breite des zu überstreichenden Frequenzintervalls ist 5-10 kHz. Dabei wird die Frequenz der Amplitudenmodulation verschoben und die Lampenimpedanz Z(fAM) an jedem Frequenzmesspunkt fAM, und zwar mit einer typischen Verharrungszeit von 0.2 bis 1 sec pro Frequenzmesspunkt, gemessen. Die Messwerte werden in einem nichtflüchtigen Speicher gespeichert.

Für die Wahl des Frequenzpunktes für den optimalen Betrieb wird der Impedanzverlauf zwischen Impedanzmaximum ZMAX bei der Frequenz FM2, unterhalb welcher keine Plasmadurchmischung mehr auftritt, und dem vorgelagerten Impedanz-Minimum ZMIN bei etwas höherer Frequenz FMmin herangezogen.

Nach Erreichen des Bereiches durch Schritt3 wird somit ein Schritt4 durchgeführt.

Dabei wird ein bevorzugter optimaler Frequenzpunkt fopt aus dem Bereich zwischen dem Punkt FMmin und dem Punkt FM2+1/5x(FM2-FMmin) ausgewählt.

Der Frequenzpunkt fopt, der hierdurch gefunden wird, hat im Wesentlichen die gleichen Eigenschaften wie jener Frequenzpunkt FMmin, welcher bei langsam durchgeführtem Scan der Lampenimpedanz ein lokales Minimum der relativen Impedanzänderung zeigt und dadurch als optimaler Frequenzpunkt für ein dauerhaftes Gleichgewicht der Durchmischung ausgezeichnet ist.

Wird die Lampenleistung durch das Vorschaltgerät geregelt (z. B. zum Zweck der Dimmung), ist nach dem Einstellen einer anderen Lampenleistung erneut der gesamte Messvorgang zu wiederholen, um den optimalen Frequenzpunkt für die neu eingestellten Lampenparameter zu bestimmen.

Diese Leistungsanpassung kann durch bekannte Charakteristiken der Lampeneigenschaften, welche bereits beim Hersteller bestimmt wurden und evtl. im elektronischen Vorschaltgerät bereits gespeichert sind, nach dem obigen Prinzip unter Wahrnehmung abkürzender Schrittfolgen mit deutlich kürzerem Zeitaufwand als bei der ersten Messung durchgeführt werden.

Das gesamte Verfahren kann selbständig von einem programmierten elektronischen Vorschaltgerät, das von einem Mikroprozessor gesteuert wird, durchgeführt werden und lässt außerdem die Anpassung der relevanten Betriebsparameter für verschiedene Lampentypen (beispielsweise unterschiedlicher Farbtemperatur) einer Lampenleistung zu. Ähnliches gilt für gleiche Lampentypen mit nicht zu stark unterschiedlicher Lampenleistung. Damit steht ein einziges elektronischen Vorschaltgerät für einen HF-Betrieb mehrerer Lampentypen zur Verfügung, mit Betriebs-Stabilisierung unter Nutzung longitudinaler akustischer Resonanzmodi, bevorzugt der zweiten akustischen Resonanz. Schließlich erlaubt diese Technologie auch die Einstellung verschiedener Farbtemperaturen bei einer Lampe, beispielsweise, indem verschiedene akustische Resonanzmodi angeregt werden.

Die Erfindung beinhaltet auch Kombinationen der oben beschriebenen Verfahren und die Implementierung des Verfahrens in ein Vorschaltgerät. Die Zeitbereiche bis zum Beginn der beschriebenen Prozeduren, d.h. der wirkungsvollen Änderungen der Frequenzen und AM-Grade werden durch die Leistungseinkopplung des Vorschaltgerätes in der Anlaufphase bestimmt. Die angegebenen Zeiträume können durch einen kurzzeitig erhöhten Leistungseintrag direkt nach dem Start der Bogenentladung um bis zu 50% verkürzt werden. Umgekehrt kann der oben angegebene Zeitraum bei Anwendung für Entladungsgefäße mit besonders hoher Wärmekapazität auch bis zu 200 % erhöht werden.

Des weiteren können die Messschritte zur Bestimmung der Frequenz fAM und des AM-Grads mehrmals durchlaufen werden.

Vorteilhaft können vom Hersteller des Systems, bzw. des Vorschaltgerätes und geeigneter Lampen, Charakteristiken für bestimmte Kombinationen aus Lampengeometrie und Füllungssystem im EVG vorprogrammiert werden, so dass ein abgekürztes Verfahren nur unter Nutzung von einzelnen Teilschritten verwendet werden kann. Es wird jedoch empfohlen, die Einstellung von fopt bei einem gegebenem AM-Grad AMI immer wieder zu überprüfen und ggf. anzupassen, so dass zumindest Schritt3 bei jedem Lampenstart durchlaufen wird.

Über automatische Messungen der Brennspannung und Impedanz der Lampe kann zusätzlich ein Start- bzw. Abschaltkriterium für die zu betreibende Hochdruck-Lampentype definiert eingestellt werden.

Neben dem Verfahren beinhaltet die Erfindung auch elektronische Vorschaltgeräte mit Mikroprozessoren, in denen die beschriebenen Prozeduren implementiert sind.

## Patentansprüche

1.  Hochdruckentladungslampe für den Resonanzbetrieb im longitudinalen Mode mit einem längsgestreckten keramischen Entladungsgefäß, das eine Lampenachse A definiert und das ein Innenvolumen mit einer Innenlänge IL und einem maximalen Innendurchmesser ID aufweist, und das in einen Mittenbereich mit konstantem Innendurchmesser ID und zwei Endbereiche mit variablem Innendurchmesser gegliedert ist, wobei im Endbereich jeweils eine Elektrode in das Entladungsgefäß ragt, **dadurch gekennzeichnet, dass** das Entladungsgefäß ein Aspektverhältnis von 2,5 bis 8, insbesondere 3 bis 6, aufweist, wobei der Endbereich eine gegebene Länge LRD besitzt, in dem sich der Innendurchmesser auf wenigstens 85 %, bevorzugt auf wenigstens 60 %, von ID reduziert, so dass eine Stirnfläche am Ende des Entladungsgefäßes verbleibt, die mindestens 15 %, bevorzugt mindestens 20 % von ID als Innendurchmesser IDE besitzt, die Einstandslänge LINS der Elektroden 7 bis 21 % von IL beträgt und die Länge LRD des Endbereichs mindestens 0,5 LINS beträgt und höchstens 1,5 LINS beträgt, insbesondere 0,75 bis 1,25 LINS.

2.  Hochdruckentladungslampe nach Anspruch 1, **dadurch gekennzeichnet, dass** der Endbereich konvex oder konkav gekrümmt ist.

3.  Hochdruckentladungslampe nach Anspruch 1, **dadurch gekennzeichnet, dass** der Endbereich konisch geformt ist.

4.  Hochdruckentladungslampe nach Anspruch 1, **dadurch gekennzeichnet, dass** in einer axialen Entfernung zwischen 0,4 und 0,6 LRD vom Ende des Entladungsgefäßes die Neigung einen Winkel von höchstens $\alpha = 45°$ und mindestens $\alpha = 15°$ gegen die Lampenachse besitzt, und insbesondere im Bereich $\alpha = 25°$ bis 35° liegt.

5.  Hochdruckentladungslampe nach Anspruch 1, **dadurch gekennzeichnet, dass** der Einstandswinkel $\alpha e$, unter dem der Endbereich vom Mittenbereich aus gesehen beginnt, höchstens $\alpha e = 45°$ beträgt.

6.  Hochdruckentladungslampe nach Anspruch 1, **dadurch gekennzeichnet, dass** der Übergang zwischen der Innenwand und der Stirnfläche glatt und ohne Kante verläuft und insbesondere einen konvexen und konkaven Abschnitt aufweist.

7.  Hochdruckentladungslampe nach Anspruch 1 bis 5, **dadurch gekennzeichnet, dass** das Entladungsgefäß eine Füllung besitzt, die Metallhalogenide aufweist.

8.  Betriebsverfahren für den Resonanzbetrieb einer Hochdruckentladungslampe nach einem der vorhergehenden Ansprüche, unter Benutzung einer hochfrequenten Trägerfrequenz, die insbesondere mittels Sweepsignal (FM) frequenzmoduliert ist, und die gleichzeitig amplitudenmoduliert (AM) wird, wobei zunächst eine Grundfrequenz der AM definiert wird, wobei die Grundfrequenz der AM $f_{2L}$ vom zweiten, longitudinalen Mode abgeleitet ist.

9.  Betriebsverfahren nach Anspruch 8, **dadurch gekennzeichnet, dass** nach dem Zünden der Lampe und Abwarten einer Karenzzeit die Einstellung der Farbtemperatur bei vorgegebener Leistung dadurch erfolgt, dass die Amplitudenmodulation periodisch zwischen mindestens zwei Zuständen wechselt.

10. Betriebsverfahren nach Anspruch 8, **dadurch gekennzeichnet, dass** die Frequenz des Sweepsignals von den ersten azimutalen und radialen Modi abgeleitet wird.

11. Betriebsverfahren nach Anspruch 8, **dadurch gekennzeichnet, dass** ein Controller die Grundfrequenz des AM-Signals einstellt.

12. Betriebsverfahren nach Anspruch 8, **dadurch gekennzeichnet, dass** ein AM-Grad zur Anregung der zweiten longitudinalen akustischen Resonanz von 10 bis 40 % verwendet wird, insbesondere 18 bis 25 %.

13. Betriebsverfahren nach Anspruch 8, **dadurch gekennzeichnet, dass** die anregende AM-Frequenz zwischen $f_{2L}$ und $f_{2L}$ - 2 kHz liegt.

14. Betriebsverfahren nach Anspruch 8, **dadurch gekennzeichnet, dass** sich die Amplitude eines fester AM-Grads stufenartig, abrupt, allmählich oder differenzierbar mit bestimmter Periodizität ändert.

15. System aus Hochdruckentladungslampe und einem EVG, mit einer Hochdruckentladungslampe nach einem der vorhergehenden Ansprüche 1 bis 7, wobei das EVG geeignet ist, ein Betriebsverfahren nach Anspruch 8 bis 14 zu realisieren.

**Claims**

1. A high-pressure discharge lamp for resonant operation in longitudinal mode, with an elongated ceramic discharge vessel that defines a lamp axis A and that has an inner volume with an inner length IL and a maximum inner diameter ID, and that is divided into a middle region with constant inner diameter ID and two end regions with variable inner diameter, whereby an electrode protrudes into the discharge vessel in each end region, **characterised in that** the discharge vessel has an aspect ratio from 2.5 to 8, in particular 3 to 6, whereby the end region has a given length LRD in which the inner diameter reduces to at least 85 %, preferably to at least 60 %, of ID, so that there remains an end surface at the end of the discharge vessel having an inner diameter IDE of at least 15 %, preferably at least 20 %, of ID, the insertion length LINS of the electrodes is 7 to 21 % of IL and the length LRD of the end region is at least 0.5 LINS and at most 1.5 LINS, in particular 0.75 to 1.25 LINS.

2. The high-pressure discharge lamp according to claim 1, **characterised in that** the end region is curved convexly or concavely.

3. The high-pressure discharge lamp according to claim 1, **characterised in that** the end region is shaped conically.

4. The high-pressure discharge lamp according to claim 1, **characterised in that**, at an axial distance of between 0.4 and 0.6 LRD from the end of the discharge vessel, the inclination has an angle relative to the lamp axis of at most $\alpha = 45°$ and at least $\alpha = 15°$, and in particular lies in the range $\alpha = 25°$ to $35°$.

5. The high-pressure discharge lamp according to claim 1, **characterised in that** the insertion angle $\alpha e$ at which the end region begins, as seen from the middle region, is at most $\alpha e = 45°$.

6. The high-pressure discharge lamp according to claim 1, **characterised in that** the transition between the inner wall and the end surface is smooth and without edge and in particular has a convex and concave portion.

7. The high-pressure discharge lamp according to claim 1 to 5, **characterised in that** the discharge vessel has a filling containing metal halides.

8. An operating method for the resonant operation of a high-pressure discharge lamp according to one of the preceding claims and using a high frequency carrier frequency, that in particular is frequency modulated by means of a sweep signal (FM), and that is simultaneously amplitude modulated (AM), whereby, firstly, a base frequency of the AM is defined, whereby the base frequency of the AM $f_{2L}$ is derived from the second longitudinal mode.

9. The operating method according to claim 8, **characterised in that**, after ignition of the lamp and a waiting period, adjustment of the colour temperature at predetermined power is achieved by periodic variation of the amplitude modulation between at least two states.

10. The operating method according to claim 8, **characterised in that** the frequency of the sweep signal is derived from the first azimuthal and radial modes.

11. The operating method according to claim 8, **characterised in that** a controller sets the fundamental frequency of the AM signal.

**EP 1 729 324 B1**

**12.** The operating method according to claim 8, **characterised in that** an AM degree from 10 to 40 %, in particular from 18 to 25 %, is used for excitation of the second longitudinal acoustic resonance.

**13.** The operating method according to claim 8, **characterised in that** the exciting AM frequency is between $f_{2L}$ and $f_{2L}$ - 2 kHz.

**14.** The operating method according to claim 8, **characterised in that** the amplitude of a fixed AM degree changes gradually, abruptly, progressively or differentiable with defined periodicity.

**15.** A system comprising a high pressure discharge lamp and an electronic ballast (EVG), with a high pressure discharge lamp according to one of the preceding claims 1 to 7, whereby the electronic ballast (EVG) is suitable for realising an operating method according to claims 8 to 14.

**Revendications**

**1.** Lampe à décharge à haute pression pour le fonctionnement en résonance dans le mode longitudinal avec une ampoule de décharge céramique allongée qui définit un axe de lampe A et qui comporte un volume intérieur avec une longueur intérieure IL et avec un diamètre intérieur maximal ID et qui est divisée en une zone médiane avec un diamètre intérieur constant ID et deux zones d'extrémité avec un diamètre intérieur variable, une électrode avançant dans l'ampoule de décharge dans chaque zone d'extrémité, **caractérisée en ce que** l'ampoule de décharge comporte un rapport d'aspect de 2,5 à 8, notamment de 3 à 6, la zone d'extrémité ayant une longueur donnée LRD en laquelle le diamètre intérieur se réduisant à au moins 85 %, de préférence à au moins 60 %, de ID, de telle sorte qu'il reste une surface frontale à l'extrémité de l'ampoule de décharge qui a comme diamètre intérieur IDE au moins 15 %, de préférence 20 %, de ID, que la longueur d'insertion LINS des électrodes vaut 7 à 21 % de IL et que la longueur LRD de la zone d'extrémité vaut au moins 0,5 LINS et au plus 1,5 LINS, notamment de 0,75 à 1,25 LINS.

**2.** Lampe à décharge à haute pression selon la revendication 1, **caractérisée en ce que** la zone d'extrémité est incurvée de façon convexe ou concave.

**3.** Lampe à décharge à haute pression selon la revendication 1, **caractérisée en ce que** la zone d'extrémité est de forme conique.

**4.** Lampe à décharge à haute pression selon la revendication 1, **caractérisée en ce que**, à une distance axiale entre 0,4 et 0,6 LRD de l'extrémité de l'ampoule de décharge, l'inclinaison a un angle d'au plus $\alpha$ = 45° et au moins $\alpha$ = 15° par rapport à l'axe de lampe, et notamment dans la plage $\alpha$ = 25° à 35°.

**5.** Lampe à décharge à haute pression selon la revendication 1, **caractérisée en ce que** l'angle d'insertion $\alpha e$ suivant lequel la zone d'extrémité commence, vue depuis la zone centrale, vaut au plus $\alpha e$ = 45°.

**6.** Lampe à décharge à haute pression selon la revendication 1, **caractérisée en ce que** la transition entre la paroi intérieure et la surface frontale est lisse et sans arête et comporte notamment un tronçon convexe et concave.

**7.** Lampe à décharge à haute pression selon la revendication 1 à 5, **caractérisée en ce que** l'ampoule de décharge a un remplissage qui comporte des halogénures métalliques.

**8.** Procédé de fonctionnement pour le fonctionnement en résonance d'une lampe à décharge à haute pression selon l'une des revendications précédentes, utilisant une fréquence porteuse de haute fréquence, qui est notamment modulée en fréquence au moyen d'un signal de balayage (FM) et qui est simultanément modulée en amplitude (AM), une fréquence fondamentale de la modulation AM étant d'abord définie, la fréquence fondamentale de la modulation AM $f_{2L}$ étant déduite du deuxième mode longitudinal.

**9.** Procédé de fonctionnement selon la revendication 8, **caractérisé en ce que**, après l'allumage de la lampe et l'attente d'un délai de carence, le réglage de la température de couleur pour une puissance prédéterminée s'effectue du fait que la modulation d'amplitude alterne périodiquement entre au moins deux états.

**10.** Procédé de fonctionnement selon la revendication 8, **caractérisé en ce que** la fréquence du signal de balayage est déduit des premiers modes azimutaux et radiaux.

**11.** Procédé de fonctionnement selon la revendication 8, **caractérisé en ce qu'**un contrôleur règle la fréquence fondamentale du signal AM.

**12.** Procédé de fonctionnement selon la revendication 8, **caractérisé en ce qu'**on utilise un degré AM pour l'excitation de la deuxième résonance acoustique longitudinale de 10 à 40 %, notamment de 18 à 25 %.

**13.** Procédé de fonctionnement selon la revendication 8, **caractérisé en ce que** la fréquence AM excitée est comprise entre $f_{2L}$ et $f_{2L}$-2kHz.

**14.** Procédé de fonctionnement selon la revendication 8, **caractérisé en ce que** l'amplitude d'un degré AM fixe varie de manière graduelle, abrupte, progressive ou différenciable avec une périodicité donnée.

**15.** Système composé d'une lampe à décharge à haute pression et d'un ballast électronique (EVG), avec une lampe à décharge à haute pression selon l'une des revendications précédentes 1 à 7, le ballast électronique (EVG) étant conçu pour réaliser un procédé de fonctionnement selon la revendication 8 à 14.

A

6

4

3

10

6

1

2

5

FIG 1

FIG 2

FIG 3

FIG 4

FIG 5

FIG 6

10

27 26

25

12 11

FIG 7

10

12

FIG 8

10

29 12

28

0,4 0,6

LRD

FIG 9

FIG 10

**FIG 11**

**FIG 12**

Netzteil

Einstellen von AMI

f(AM)

AM-Signal-Generator

Variabler Amplituden-Modulator

Leistungsstufe

Hochdrucklampe

FM-Signal-Generator

Frequenz-Modulator

Rückkopplungsschleife

Timer/Sequencer

Datenspeicher

U(t), I(t)-Messung A/D-Wandler

Controller

FIG 13

FIG 14

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 926703 A
- US 6400100 B
- US 2003117075 A
- US 2003117085 A
- US 2005067975 A
- US 2004095076 A
- US 5773937 A
- EP 1058288 A
- EP 1394838 A
- US 6184633 B
- US PS6400100 B